(19)

Europäisches
Patentamt
European
Patent Office
Office européen
des brevets

(11) **EP 4 450 925 A1**

(12) **EUROPEAN PATENT APPLICATION**

(43) Date of publication:
**23.10.2024 Bulletin 2024/43**

(21) Application number: **23169054.6**

(22) Date of filing: **20.04.2023**

(51) International Patent Classification (IPC):
**G01C 21/16** (2006.01) **G01S 19/47** (2010.01)
**G01S 19/49** (2010.01)

(52) Cooperative Patent Classification (CPC):
**G01C 21/165; G01C 21/188; G01S 19/47;
G01S 19/49**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Valeo Comfort and Driving Assistance
94000 Créteil (FR)**

(72) Inventors:
• **RADWAN, Mohamed
  94000 Créteil (FR)**
• **ZAKY, Alaaeldin
  94000 Créteil (FR)**

(74) Representative: **Delplanque, Arnaud
  Valeo Comfort and Driving Assistance
  6 rue Daniel Costantini
  94000 Créteil (FR)**

(54) **LOCALIZING A MOVING VEHICLE**

(57)     The disclosure notably relates to a computer-implemented method for localization of a moving vehicle based on GNSS data and vehicle sensor data. The method comprises, in real-time, obtaining vehicle motion data stemming from at least one vehicle sensor. The method also comprises obtaining, while the GNSS signal is available, GNSS data of a positioning of the vehicle. The GNSS data includes a distance variation and an orientation variation. The method also comprises calibrating parameters of an odometer of the vehicle. The calibration is based on a data fusion that uses a Kalman filter. The Kalman filter determines a predicted distance variation and a predicted orientation variation of the vehicle based on a current calibration of the odometer parameters and on the motion data. The Kalman filter also compares the predicted distance variation and predicted orientation variation to the distance variation and the orientation variation of the GNSS data.

FIG. 1

EP 4 450 925 A1

## Description

### TECHNICAL FIELD

The disclosure relates to the field of computer programs and systems, and more specifically to a method, system and program for localization of a moving vehicle.

### BACKGROUND

A number of systems and programs are offered on the market for tracking the localization of a vehicle.
Within this context, there is still a need for an improved method for localization of a moving vehicle.

### SUMMARY

It is therefore provided a computer-implemented method for localization of a moving vehicle based on GNSS data and vehicle sensor data. The method comprises, in real-time, obtaining vehicle motion data. The vehicle motion data stems from at least one vehicle sensor. The method also comprises, in real-time, obtaining, while the GNSS signal is available, GNSS data of a positioning of the vehicle. The GNSS data includes a distance variation and an orientation variation. The method also comprises, in real-time, calibrating parameters of an odometer of the vehicle. The calibration is based on a data fusion that uses a Kalman filter. The Kalman filter determines a predicted distance variation and a predicted orientation variation of the vehicle based on a current calibration of the odometer parameters and on the motion data. The Kalman filter also compares the predicted distance variation and predicted orientation variation to the distance variation and the orientation variation of the GNSS data.
The method may comprise one or more of the following:

- the odometer predicts cyclically in time a new location of the vehicle and a new heading of the vehicle based on a location and heading predicted at the previous cycle and on the motion data;
- the motion data includes the vehicle speed in the current cycle, the vehicle speed in the previous cycle, and the vehicle yaw rate in the current cycle;
- the parameters of the odometer include a vehicle speed scaling, a vehicle yaw rate scaling, and a vehicle yaw rate offset;
- calibrating parameters includes correcting one or any combination of the vehicle speed scaling, the vehicle yaw rate scaling, and the vehicle yaw rate offset;
- the motion data stems from a wheel sensor, an Inertial Measurement Unit (IMU), and a steering system sensor;
- the GNSS data further includes a location and heading of the vehicle, and the method further comprises, in real-time:

    when the GNSS signal is available, determining a localization of the vehicle by performing a data fusion that is based on a Kalman filter that predicts the vehicle localization based on a fusion of the location and heading of the GNSS data and a location and heading predicted according to the calibrated odometer parameters;
    when the GNSS signal is lost, determining a localization of the vehicle based on a location and heading predicted according to the calibrated odometer parameters;

- the GNSS data stems from a GNSS device that comprises only one antenna; and/or
- the vehicle is a motorbike, a car, a bus or a truck.

It is further provided a computer program comprising instructions which, when executed by a computer system, cause the system to perform the method.
It is further provided a computer readable storage medium having recorded thereon the computer program.
It is further provided a system comprising a processor coupled to a memory, the memory having recorded thereon the computer program.
The system may comprise one or more of the following:

- the system is coupled with or further comprises the GNSS device, the odometer, and the at least one sensor; and/or
- the at least one sensor includes a wheel sensor, an Inertial Measurement Unit (IMU), and a steering system sensor;

It is further provided a vehicle equipped with the system.

## BRIEF DESCRIPTION OF THE DRAWINGS

Non-limiting examples will now be described in reference to the accompanying drawings, where:

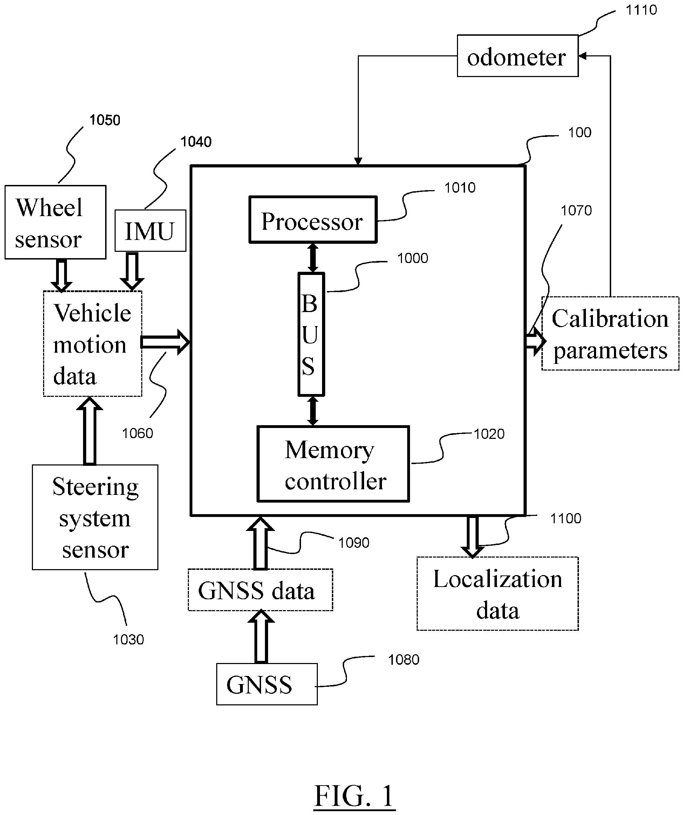

- FIG. 1 shows an example of the system; and
- FIG.s 2 to 4 illustrate the method.

## DETAILED DESCRIPTION

It is proposed a computer-implemented method for localization of a moving vehicle based on Global Navigation Satellite System (also called GNSS herein below) data and vehicle sensor data. The method comprises, in real-time, obtaining vehicle motion data. The vehicle motion data stems from at least one vehicle sensor. The method also comprises, in real-time, obtaining, while the GNSS signal is available, GNSS data of a positioning of the vehicle. The GNSS data includes a distance variation and an orientation variation. The method also comprises, in real-time, calibrating parameters of an odometer of the vehicle. The calibration is based on a data fusion that uses a Kalman filter. The Kalman filter determines a predicted distance variation and a predicted orientation variation of the vehicle based on a current calibration of the odometer parameters and on the motion data. The Kalman filter also compares the predicted distance variation and predicted orientation variation to the distance variation and the orientation variation of the GNSS data.

Such a method improves the localization of the moving vehicle.

Notably, the method achieves an improved accuracy for localizing the moving vehicle regardless of where the vehicle may be spatially localized, for example, regardless of whether the vehicle is localized inside a tunnel or in an open field. This is because the localization of the vehicle is determined from two types of data: the vehicle motion data and the GNSS data while the GNSS signal is available. On one hand, vehicle motion data consists on local data which is acquired from the at least one vehicle sensor (for example comprising a wheel sensor, an Inertial Measurement Unit (IMU), and a steering system sensor) and thus provides data about the vehicle motion. On the other hand, the GNSS data provides an accurate data of positioning of the vehicle (including GNSS motion data such as the distance variation and the orientation variation) while the GNSS signal is available, for example, in an open field covered by GPS coverture (which is the case during the majority of the vehicle's trip, except on short periods where the vehicle goes through a tunnel or the like). However, the vehicle motion data on its own is sensible to sensor-related errors. For example, the speed obtained from a sensor such as a wheel encoder may be based on a default tire size (wheel circumference), which could vary due to change of tire pressure/temperature or exchanging the tires with others with different circumference like the summer/winter exchange. Such change in the tire size may introduce scaling factor error in the measured speed. Moreover, a sensor such as an IMU provides angular speeds and acceleration for yaw, pitch, and roll based on builtin gyroscope. The readings of such electro-mechanical sensor may be highly affected by significant temperature/pressure changes, and a slight shift in the mounting of the sensor shall introduce bias error to it. Finally, a sensor such as a steering system sensor is based on feeding back the place of the slider on the steering rack to indicate the steering measurement, which may present offset errors due to its mechanical sliding resolution. Hence, the Odometer sensors scaling and offset errors may be dynamically changing, and the present method may estimate them continuously in order to locate the vehicle accurately. However, as the method also relies also on the GNSS data, the method re-calibrates the odometer using the GNSS data, which is known to be particularly reliable, so as to compensate for such errors.

Indeed, thanks to the method achieving a continuous calibration of the parameters of the odometer of the vehicle, the method further improves the robustness for localizing the vehicle based on both the vehicle motion data and the GNSS data. As outlined above, the odometer (providing information on the motion of the vehicle) may be subject to changes in pressure and/or temperature which may introduce error factors in the vehicle motion data stemming from the at least one sensor. However, thanks to the use of the Kalman filter, the method determines a predicted distance variation and a predicted orientation variation based on a data fusion of the GNSS and sensor data so that the method corrects parameters of the odometer based on the comparison of the predicted (*i.e.* using the sensor motion data) distance variation and predicted (*i.e.* using the sensor motion data) orientation variation to the distance variation and the orientation variation of the GNSS data. Due to the method performing the signals capturing in real time, the calibration is also done relatively continuously (e.g., continuously while the GNSS signal is available, e.g. at regular and short time intervals/steps) and thus the odometer is persistently calibrated as the comparison is done every time there is a track (that is, a distance traveled by the vehicle) that can be extracted from both the odometer and GNSS data, for example where there is suitable coverage from a GNSS system such as satellites. In other words, upon losing the GNSS data, the calibrated odometer, which is conform to the last available GNSS data, makes on its own accurate prediction using the calibrated parameters during the absence of the GNSS data. In yet other words, as long as the GNSS data is available, which again corresponds the majority of the vehicle's trip, the odometer is continuously/in real-time calibrated and the vehicle localization can be determined based on the calibrated odometer and on the GNSS and sensor data.

When the GNSS data is lost, for example in a tunnel, which often correspond to a relatively short period of time comparted to the duration of the vehicle's trip, localization can be made on the sole prediction performed by the odometer based on the lastly calibrated parameters and based on the sensor motion data.

The method is computer-implemented. This means that steps (or substantially all the steps) of the method are executed by at least one computer, or any system alike. Thus, steps of the method are performed by the computer, possibly fully automatically, or, semi-automatically. In examples, the triggering of at least some of the steps of the method may be performed through user-computer interaction. The level of user-computer interaction required may depend on the level of automatism foreseen and put in balance with the need to implement user's wishes. In examples, this level may be user-defined and/or pre-defined.

A typical example of computer-implementation of a method is to perform the method with a system adapted for this purpose. The system may comprise a processor coupled to a memory and a graphical user interface (GUI), the memory having recorded thereon a computer program comprising instructions for performing the method. The memory may also store a database. The memory is any hardware adapted for such storage, possibly comprising several physical distinct parts (e.g. one for the program, and possibly one for the database). The system may be coupled or further comprise the GNSS device, the odometer, and the at least one sensor. The at least one sensor may include a wheel sensor, an Inertial Measurement Unit (IMU), and a steering system sensor.

FIG. 1 shows an example of the system, wherein the system is a computer system 100 configured to be mounted on a vehicle.

The computer 100 of the example comprises a processor or processing unit such as a central processing unit (CPU) 1010 connected to an internal communication BUS 1000. A random access memory (RAM) may be optionally connected to the BUS (not shown). A memory controller 1020 manages accesses to a mass memory device, such as hard drive or other form of non-volatile memory such as EPROM, EEPROM, and flash memory devices. Any of the foregoing may be supplemented by, or incorporated in, specially designed ASICs (application-specific integrated circuits). The computer may optionally also include a display, e.g., a touch screen (not shown). The display may be configured for displaying the localization of the vehicle. The computer 100 may be coupled with a GNSS 1080 through a port or interface 1090 and with a wheel sensor 1050 like a wheel encoder, an IMU 1040 and a steering system sensor 1030 through a port or interface 1060. The computer 100 may comprise an output port 1070 for sending calibration parameters to the odometer 1110. The computer 100 may also comprise an output port 1100 for outputting the data forming the vehicle's predicted localization. The odometer 1110 may be coupled with the computer 100 as shown in the figure to send its predictions to the computer. The data may comprise the localization and the heading of the vehicle and any other localization data discussed herein. The display may also be configured for displaying the localization of the vehicle.

The computer program may comprise instructions executable by a computer, the instructions comprising means for causing the above system to perform the method. The program may be recordable on any data storage medium, including the memory of the system. The program may for example be implemented in digital electronic circuitry, or in computer hardware, firmware, software, or in combinations of them. The program may be implemented as an apparatus, for example a product tangibly embodied in a machine-readable storage device for execution by a programmable processor. Method steps may be performed by a programmable processor executing a program of instructions to perform functions of the method by operating on input data and generating output. The processor may thus be programmable and coupled to receive data and instructions from, and to transmit data and instructions to, a data storage system, at least one input device, and at least one output device. The application program may be implemented in a high-level procedural or object-oriented programming language, or in assembly or machine language if desired. In any case, the language may be a compiled or interpreted language. The program may be a full installation program or an update program. Application of the program on the system results in any case in instructions for performing the method. The computer program may alternatively be stored and executed on a server of a cloud computing environment, the server being in communication across a network with one or more clients. In such a case a processing unit executes the instructions comprised by the program, thereby causing the method to be performed on the cloud computing environment.

It is further provided a vehicle equipped with the system. The vehicle may be a motorbike, a car, a bus or a truck.

The method is for determining the localization of the moving vehicle, that is, the spatial location of the vehicle as it follows a generally continuous movement (this does however not exclude vehicle stops, for example at red lights). The localization may be expressed in terms of the 3D cartesian coordinates $(x,y,z)$ with $z$ denoting (by convention) an altitude of the vehicle with respect to the x-y plane or 2D cartesian coordinates $(x,y)$, by considering the projection of the vehicle to the ground in the x-y plane. The method may output the localization of the vehicle. For example, the method may output the location of the vehicle in 3D or 2D cartesian coordinates. The method may also output the speed of the vehicle, the heading and/or the yaw rate.

Steps of the method are performed in real-time. In other words, steps of the method may be performed each in a relatively short time (for example in the order of milliseconds) so that the duration of the steps is low enough to so as to appear continuous (within a discrete approximation).

The vehicle motion data is obtained (as it stems from the at least one vehicle sensor) in real time, that is, as a sequence of discrete values being separated by a short time-difference. The GNSS data is also obtained in real time while the GNSS signal is available. The method may obtain the vehicle motion data and/or the GNSS data as a sequence of values. The sequence of values may be time-ordered, i.e., the vehicle motion data and the GNSS data may be time-ordered sequences, where respective values are ordered according to the time by which the value was obtained. Each value in a respective time-ordered sequence may be associated with a time-stamp. The time-stamp may be a piece of data comprising a value of time, e.g., a time (having for example date and hour or alternatively indicated by an index) in which the vehicle motion data is acquired by the at least one vehicle sensor (in the case of the vehicle motion data) or a time in which the GNSS data is acquired while the GNSS signal is available. In examples, two values of the sequence of values may be separated by a time difference, for example an uniform time-difference between each other (for example, two consecutive values) or alternatively, by a non-uniform time-difference between two values.

The vehicle motion data stems from at least one vehicle sensor. In other words, values obtained from vehicle motion data are the result of the measurement by the sensor corresponding to the vehicle's motion. By "motion data" it is meant any time-ordered sequence of values indicative of the vehicle's motion, for example indicating a position, speed, yaw and/or steering. The motion data may stem from a wheel sensor, an Inertial Measurement Unit (IMU), and a steering system sensor. In other words, the vehicle motion data may stem from the wheel sensor, the Inertial Measurement Unit (IMU), and the steering system sensor.

The method obtains in real-time, while the GNSS signal is available, GNSS data of a positioning of the vehicle. The GNSS data includes a distance variation and an orientation variation. The GNSS data may be a time-ordered sequence of values, each value including the distance variation and a orientation variation at each respective time. The "distance variation" may mean any variation of the distance travelled by the vehicle in a predetermined time-step according to the measurements of the GNSS data. The "orientation variation" may mean any variation of the orientation of the vehicle in a predetermined time-step according to the GNSS data. In other words, the GNSS data of the altitude of the vehicle is provided from the Global Navigation Satellite System while the GNSS signal is available, for example when the vehicle is in an open area with GNSS coverage. The Global Navigation Satellite System may be for example the GPS system, GLONASS or GALILEO navigation system.

The method calibrates in real-time parameters of the odometer. By "calibration" it is to be understood that the method modifies the parameters of the odometer so that the odometer makes vehicle localization predictions that are in line with the GNSS data. The parameters of the odometer may include a vehicle speed scaling, a vehicle yaw rate scaling, and a vehicle yaw rate offset. The method may calibrate only one of the vehicle scaling, the vehicle yaw rate scaling or the vehicle yaw rate offset. Alternatively, the method may calibrate more than one (for example all) of the parameters.

The calibration is based on a data fusion that uses a Kalman filter. By "data fusion" it is meant that the vehicle motion data is used concomitantly with the GNSS data (for example by comparing the vehicle motion data with the GNSS data, while the GNSS signal is available) for calibrating parameters of the odometer. The Kalman filter (also denoted herein below as a "Fusion block 1") determines a predicted distance variation and a predicted orientation variation of the vehicle based on a current calibration of the odometer parameters and on the motion data. This correspond to the prediction step of the Kalman filter, as known per se from Kalman filters. The Kalman filter also compares the predicted distance variation and predicted orientation variation to the distance variation and the orientation variation of the GNSS data. This correspond to the correction step of the Kalman filter, as known per se from Kalman filters.

The GNSS data may stem from a GNSS device that comprises only one antenna. The only one antenna may be configured to receive the signal from the GNSS system, such as the GPS system. As the method comprises only one antenna, the system is simple and cheap as it relies on less resources for obtaining the GNSS data. In addition, the localization is made entirely online, so that the use of localization sensors or lasers may be avoided (which may add further errors and cost).

The odometer may predict cyclically in time a new location of the vehicle and a new heading of the vehicle based on a location and heading predicted at the previous cycle and on the motion data. In other words, the odometer may perform the prediction periodically (e.g., at regular and short time steps) based on a location and heading predicted at a timing prior to the prediction (e.g. at the previous time step). "Current cycle" may refer to the current time step, and "previous cycle" may refer to the preceding/previous time step. This ensures that the filter Kalman provides a sequential and cyclical prediction of the location as it receives the motion data and the GNSS data.

The odometer may predict cyclically in time the new location of the vehicle and the new heading of the vehicle as variables [$x$, $y$, $v_x$, $v_y$] based on the location predicted at the previous cycle and heading of the previous cycle and on motion data $I = \{v_n, v_0, \dot{\theta}_n\}$. The variables $x$, $y$ denote the location of the vehicle in an x-y plane. The variables $v_x$, $v_y$

denote the speed components of the vehicle. The vehicle's heading angle is denoted by $\tan^{-1}\left(\frac{v_y}{v_x}\right)$.

The motion data may include the vehicle speed in the current cycle, the vehicle speed in the previous cycle (at a timing preceding the current cycle), and the vehicle yaw rate in the current cycle. The motion data may be captured as the formula $I = \{v_n, v_0, \dot{\theta}_n\}$ (e.g. implemented in the computer using this formula), including the variables $v_n, v_0, \dot{\theta}_n$, where $v_n$ denotes the vehicle speed in the current cycle, $v_0$ denotes the vehicle speed in the previous cycle, and $\dot{\theta}_n$ denotes the vehicle yaw rate in the current cycle.

Calibrating parameters of the odometer may include correcting one or any combination of the vehicle speed scaling, the vehicle yaw rate scaling, and the vehicle yaw rate offset. The calibration of the parameters of the odometer allows to compensate scaling and offset errors in the vehicle motion data, thereby improving the real-time estimation of the positioning of the vehicle.

The parameters of the odometer may be the vehicle speed scaling, the vehicle yaw rate scaling, and the vehicle yaw rate offset, for example respectively denoted as $[S_s, \dot{\theta}_s, \dot{\theta}_o]$. The parameters of the odometer may be calibrated by comparing a distance variation $\Delta S$ (also referred to as "driven distance") and an orientation variation/change $\Delta\theta$ (computed by the Odometer for a specific vehicle's track) with a corresponding distance variation $\Delta S$ and orientation variation $\Delta\theta$ included in the GNSS data.

The Kalman filter that determines the predicted distance variation and the predicted orientation variation of the vehicle may be denoted mathematically by a prediction function $f_1()$ that receives the initial state of the parameters output from a previous cycle $(\hat{x}_{1_0})$ and the current vehicle motion data $(I_1)$ (obtained at a current cycle) to generate a priori predicted state of the parameters ( $\hat{x}_1^-$ ). The priori predicted state is fed to a function $h_1()$. The function $h_1()$ converts the priori predicted state to the measurement space where the predicted measurement $(\hat{x}_{1_m})$ is obtained. The Kalman filter computes the fused posteriori state $(\hat{x}_{1_n})$ based on the Kalman innovation, which is the difference between the measurement from GNSS data and the predicted measurement from motion signals.

The vehicle motion data $(I_1)$ may be presented with the integrals of the speed signals and yaw rate signals along the track beside the elapsed time $(\Delta T)$ along the track, so as to take into account that the Kalman filters determines the predicted distance variation and the predicted orientation variation of the vehicle on a track between the current cycle and the previous cycle. The method may use such integrals to output a resulting driven distance $(\Delta S_{in})$ and orientation change $(\Delta\theta_{in})$ of the track from the vehicle motion data, which is presented with ($n$) samples of input signals of vehicle speed $(v_i)$ and yaw rate $(\dot{\theta}_i)$ coming at time intervals $(\Delta t_i)$.

$$\Delta S_{in} = \sum_{i=1}^{n} [v_i \times \Delta t_i]$$

$$\Delta \theta_{in} = \sum_{i=1}^{n} [\dot{\theta}_i \times \Delta t_i]$$

$$\Delta T = \sum_{i=1}^{n} [\Delta t_i]$$

$$I_1 = \{\Delta S_{in}, \Delta \theta_{in}, \Delta T\}$$

$$x_1^- = f_1(x_{1_0}, I_1)$$

$$\hat{x}_1^- = f_1(\hat{x}_{1_0}, I_1)$$

$$\begin{bmatrix} S_s \\ \dot{\theta}_s \\ \dot{\theta}_O \end{bmatrix} = f_1 \left( \begin{bmatrix} S_s \\ \dot{\theta}_s \\ \dot{\theta}_O \end{bmatrix}, I_1 \right)$$
$$\hat{x}_1^- \qquad\qquad \hat{x}_{1_0}$$

$$\hat{x}_{1_m} = \begin{bmatrix} \Delta S_m \\ \Delta \theta_m \end{bmatrix}$$

$$\hat{x}_{1_m} = h_1(\hat{x}_1^-, I_1)$$

$$Z_1 = \begin{bmatrix} \Delta S_{GNSS} \\ \Delta \theta_{GNSS} \end{bmatrix}$$

$$\hat{x}_{1_n} = \hat{x}_1^- + K_1 [Z_1 - \hat{x}_{1_m}]$$

The GNSS data may further include a location and heading of the vehicle. The method may further comprise, in real-time, when the GNSS signal is available, determining a localization of the vehicle by performing a data fusion that is based on a Kalman filter (also denoted herein below as "Fusion block 2") that predicts the vehicle localization based on fusion of the location and heading of the GNSS data and a location and heading predicted according to the calibrated odometer parameters. it is meant that the method uses the usual Kalman filter methods for performing the prediction and calibration. The method may calibrate the parameters of the odometer based on the predicted vehicle localization. In examples, the method may set the parameters of the odometer after determining the localization of the vehicle. This ensures that the calibration is performed dynamically.

The method may obtain from the odometer the vehicle's position and heading based on the result of the comparison (that is, the latest modified calibration parameters), which may be added to the vehicle position and heading that are fused with the ones obtained from GNSS in the Fusion block 2 to generate the vehicle's location.

The method may further comprise, in real-time, when the GNSS signal is lost, determining a localization of the vehicle based on a location and heading predicted according to the calibrated odometer parameters. In other words, upon losing GNSS data (for instance whenever the vehicle is on an area not covered by GNSS signal such as a tunnel or interior area), the method determines the localization of the vehicle using only the prediction of the vehicle's heading and position (which then form the localization data) by the odometer according to its calibrated parameters (that is, according to the parameters lastly calibrated according of the lastly available GNSS data). In yet other words, the odometer thus relies on such calibration while the GNSS data is lost, and the localization determination is solely based on the odometer's processing of the motion data according to this calibration. When the GNSS signal is recovered, the method may perform the calibration again as describe above and thus re-adjusts the odometer with the available GNSS data.

This further improves the accuracy of the calibration of the odometer, as the method accurately determines the location of the vehicle, including the steering. This is because the method determines the location and heading according to the calibrated parameters of the odometer, and thus, according to odometer parameters that are in line with the lastly available GNSS data, and that are thereby reliable. Moreover, as the calibration is performed dynamically, the method feeds back the odometer to recalibrate the odometer, thereby reducing bias errors that may be present in electro-mechanical sensors.

Examples of the Kalman Filter that predicts the vehicle localization are now discussed. Let $[S_s, \dot{\theta}_s, \dot{\theta}_o]$ (which denote the parameters of the odometer) denote state of the Kalman filter that determines a predicted distance variation and a predicted orientation variation of the vehicle (that is, the Fusion block 1). Let $[x, y, v_x, v_y]$ denote the state of the Kalman filter that predicts the localization of the vehicle (That is, the Fusion block 2), the state representing $[x, y, v_x, v_y]$ the vehicle's position and orientation presented with the vehicle velocity components in x and y directions.

The Kalman's filter corresponding to Fusion block 2 is denoted by the equations:

$$I_2 = \{ v_n, v_0, \dot{\theta}_n \},$$

$$x_2^- = f_2\left(x_{2_0}, x_{1_n}, I_2\right),$$

$$\hat{x}_2^- = f_2\left(\hat{x}_{2_0}, \hat{x}_{1_n}, I_2\right),$$

$$\underbrace{\begin{bmatrix} x \\ y \\ v_x \\ v_y \end{bmatrix}}_{\hat{x}_2^-} = f_2\left(\underbrace{\begin{bmatrix} x \\ y \\ v_x \\ v_y \end{bmatrix}}_{\hat{x}_{2_0}}, \underbrace{\begin{bmatrix} S_s \\ \dot{\theta}_s \\ \dot{\theta}_o \end{bmatrix}}_{\hat{x}_{1_n}}, I_2\right),$$

$$Z_2 = \begin{bmatrix} x_{GNSS} \\ y_{GNSS} \\ v_{x\,GNSS} \\ v_{y\,GNSS} \end{bmatrix},$$

$$\hat{x}_{2_m} = h_2\left(\hat{x}_2^-, \hat{x}_{1_n}\right),$$

$$\hat{x}_{2_n} = \hat{x}_2^- + K_2\left[\hat{Z}_2 - \hat{x}_{2_m}\right].$$

The method may calibrate the parameters of the odometer dynamically, based on the Fusion block 1. The method may perform a fusion of the prediction of the vehicle localization and the adaptation may be expressed mathematically by a mean equation $\left\{\hat{x}_1^-, \hat{x}_{1_n}\right\}$ and a covariance equation $\left\{P_1^-, P_{1_n}\right\}$ expressed as follows:

$$x_1^- = f_1\left(x_{1_0}, I_1\right)$$

$$\hat{x}_1^- = f_1\left(\hat{x}_{1_0}, I_1\right)$$

$$I_1 = \{\Delta S_{in}, \Delta\theta_{in}, \Delta T\}$$

$$(x_1^-.S_s) = \left(x_{1_0}.S_s\right)$$

$$\left(x_1^-.\dot{\theta}_s\right) = \left(x_{1_0}.\dot{\theta}_s\right)$$

$$\left(x_1^-.\dot{\theta}_o\right) = \left(x_{1_0}.\dot{\theta}_o\right)$$

$$F_{1_x} = \left.\frac{\partial x_1^-}{\partial x_{1_0}}\right|_{x_{1_0}=\hat{x}_{1_0}} = \left.\frac{\partial f_1\left(x_{1_0}, I_1\right)}{\partial x_{1_0}}\right|_{x_{1_0}=\hat{x}_{1_0}} = I_{3\times 3}$$

$$P_1^- = F_{1_x} P_{1_0} F_{1_x}{}^T + Q_1 = I_{3\times 3} P_{1_0} I_{3\times 3}{}^T + Q_1 = P_{1_0} + Q_1$$

$$\frac{\partial(x_1^-.S_s)}{\partial(x_{1_0}.S_s)} = 1 \qquad \frac{\partial(x_1^-.S_s)}{\partial(x_{1_0}.\dot\theta_s)} = 0 \qquad \frac{\partial(x_1^-.S_s)}{\partial(x_{1_0}.\dot\theta_o)} = 0$$

$$\frac{\partial(x_1^-.\dot\theta_s)}{\partial(x_{1_0}.S_s)} = 0 \qquad \frac{\partial(x_1^-.\dot\theta_s)}{\partial(x_{1_0}.\dot\theta_s)} = 1 \qquad \frac{\partial(x_1^-.\dot\theta_s)}{\partial(x_{1_0}.\dot\theta_o)} = 0$$

$$\frac{\partial(x_1^-.\dot\theta_o)}{\partial(x_{1_0}.S_s)} = 0 \qquad \frac{\partial(x_1^-.\dot\theta_o)}{\partial(x_{1_0}.\dot\theta_s)} = 0 \qquad \frac{\partial(x_1^-.\dot\theta_o)}{\partial(x_{1_0}.\dot\theta_o)} = 1$$

$$F_{1_x} = \begin{bmatrix} 1 & 0 & 0 \\ 0 & 1 & 0 \\ 0 & 0 & 1 \end{bmatrix} = I_{3\times 3}$$

However, a process noise ($Q_1$) may be added to the calibration parameters covariance as it may be slightly changing over time for mainly temperature/pressure changes. Such added process noise may lead to force retuning of the parameters when significantly long time passed without adaption.

$$P_1^- = P_{1_0} + Q_1$$

$$x_{1_m} = \begin{bmatrix} \Delta S_m \\ \Delta\theta_m \end{bmatrix}$$

$$x_{1_m} = h_1(x_1^-, I_1)$$

$$\hat{x}_{1_m} = h_1(\hat{x}_1^-, I_1)$$

$$\left(\hat{x}_{1_m}.\Delta S\right) = (\hat{x}_1^-.S_s) \times \sum_{i=1}^{n}[v_i \times \Delta t_i] = (\hat{x}_1^-.S_s) \times \Delta S_{in}$$

$$\left(\hat{x}_{1_m}.\Delta\theta\right) = \left(\hat{x}_1^-.\dot\theta_s\right) \times \sum_{i=1}^{n}[\dot\theta_i \times \Delta t_i] + \left(\hat{x}_1^-.\dot\theta_o\right) \times \sum_{i=1}^{n}[\Delta t_i]$$

$$\left(\hat{x}_{1_m}.\Delta\theta\right) = \left(\hat{x}_1^-.\dot\theta_s\right) \times \Delta\theta_{in} + \left(\hat{x}_1^-.\dot\theta_o\right) \times \Delta T$$

$$\frac{\partial(x_{1_m}.\Delta S)}{\partial(x_1^-.S_s)} = \Delta S_{in} \qquad \frac{\partial(x_{1_m}.\Delta S)}{\partial(x_1^-.\dot\theta_s)} = 0 \qquad \frac{\partial(x_{1_m}.\Delta S)}{\partial(x_1^-.\dot\theta_o)} = 0$$

$$\frac{\partial\left(x_{1_m}.\Delta\theta\right)}{\partial\left(x_1^-.S_s\right)} = 0 \qquad \frac{\partial\left(x_{1_m}.\Delta\theta\right)}{\partial\left(x_1^-.\dot{\theta}_s\right)} = \Delta\theta_{in} \qquad \frac{\partial\left(x_{1_m}.\Delta\theta\right)}{\partial\left(x_1^-.\dot{\theta}_o\right)} = \Delta T$$

$$H_1 = \frac{\partial h_1(x_1^-, I_1)}{\partial x_1^-}\bigg|_{x_1^-=\hat{x}_1^-} = \frac{\partial x_{1_m}}{\partial x_1^-}\bigg|_{x_1^-=\hat{x}_1^-} = \begin{bmatrix} \Delta S_{in} & 0 & 0 \\ 0 & \Delta\theta_{in} & \Delta T \end{bmatrix}$$

$$K_1 = P_1^- \ H_1^T \left(H_1 \ P_1^- \ H_1^T + R\right)^{-1}$$

$$\hat{x}_{1_n} = \hat{x}_1^- + K_1\left[\hat{Z}_1 - h_1(\hat{x}_1^-, I_1)\right]$$

$$P_{1_n} = P_1^- - K_1 \ H_1 \ P_1^-$$

It shall be noted that the GNSS measurement state $Z_1$ is presented with mean $\hat{Z}_1$ and covariance $R_1$. The covariance matrix of the GNSS measurements can be set to a diagonal matrix, with each of the diagonal elements presents the variance of one of the state elements assuming no correlation between them as follows.

$$Z_1 = \begin{bmatrix} \Delta S_{GNSS} \\ \Delta\theta_{GNSS} \end{bmatrix}$$

$$\hat{Z}_1 = \begin{bmatrix} \widehat{\Delta S}_{GNSS} \\ \widehat{\Delta\theta}_{GNSS} \end{bmatrix}$$

$$R_1 = \begin{bmatrix} \left(\sigma_{\Delta S_{GNSS}}\right)^2 & 0 \\ 0 & \left(\sigma_{\Delta\theta_{GNSS}}\right)^2 \end{bmatrix}$$

In order to estimate the variance in the driven distance and orientation change along a tack of GNSS detected location points, the standard deviation provided in the GNSS data for both the GNSS estimated speed and heading shall be used. The signals *sigma_speed* and *sigma_heading* provided by GNSS can be used to present the standard deviation in the GNSS speed ($\sigma_{v_{GNSS}}$) and the standard deviation in the GNSS heading ($\sigma_{\theta_{GNSS}}$), respectively at every GNSS location point. Thus, the computing of the variance of the driven distance ($\sigma_{\Delta S_{GNSS}}$)$^2$ and orientation change ($\sigma_{\Delta\theta_{GNSS}}$)$^2$ along GNSS track can be formulated as follows.

$$\Delta S_{GNSS} = \sum_{i=1}^{n}\left(v_{i_{GNSS}} \times \Delta t_{i_{GNSS}}\right)$$

where $\Delta S_{GNSS}$ is the driven distance along GNSS track, $v_{i_{GNSS}}$ is the speed provided by GNSS data at every GNSS location point with index i, and $\Delta t_{i_{GNSS}}$ is the time span of the GNSS provided data at index *i* till the data in the next step is provided.

By retrieving the Expectation $E[]$ and Variance $Var[]$ definitions for single random variable, the following rules can be derived assuming x, y, and z are random variables and *a* is an arbitrary constant value.

$$if\ y\ =\ a\ x\ ,then\ E[y] = E[a\ x]\ =\ a\ E[x]$$

$$then, Var[y] =\ E[(y - \hat{y})^2] = E[y^2 + \hat{y}^2 - 2y\hat{y}] = E[y^2] +\ E[\hat{y}^2] - 2\ E[y\hat{y}]$$

$$= E[y^2] -\ E^2[y]$$

$$Var[y] = E[a^2\ x^2] -\ a^2\ E^2[x] = a^2\ (E[x^2] -\ E^2[x]) = a^2\ Var[x]$$

$$if\ y\ =\ x\ +\ z\ ,then\ E[y] =\ E[x] +\ E[z]$$

$$then, Var[y] = E[y^2] - E^2[y]$$

$$= E[x^2 + z^2 + 2xz] -\ E^2[x] - E^2[z] - 2\ E[x]\ E[z]$$

$$Var[y] = E[x^2] -\ E^2[x] + E[z^2] -\ E^2[z] + 2\ (E[xz] -\ E[x]\ E[z])$$

$$if\ x\ and\ z\ are\ independent, then\ Var[y] = Var[x] + Var[z]$$

$$\left(\sigma_{\Delta S_{GNSS}}\right)^2 =\ \sum_{i=1}^{n}\left(\Delta t_{i_{GNSS}}\right)^2\ \left(\sigma_{v_{i_{GNSS}}}\right)^2$$

On the other hand, the orientation change is the difference in the heading at the final and initial points along the track with length of $n$ points. Thus, its variance can be computed as follows.

$$\Delta\theta_{GNSS} =\ \theta_{n_{GNSS}} - \theta_{1_{GNSS}}$$

$$if\ y\ =\ x\ -\ z\ ,then\ E[y] =\ E[x] -\ E[z]$$

$$then, Var[y] = E[y^2] - E^2[y]$$

$$= E[x^2 + z^2 - 2xz] -\ E^2[x] - E^2[z] + 2\ E[x]\ E[z]$$

$$Var[y] = E[x^2] -\ E^2[x] + E[z^2] -\ E^2[z] - 2\ (E[xz] -\ E[x]\ E[z])$$

$$if\ x\ and\ z\ are\ independent, then\ Var[y] = Var[x] + Var[z]$$

$$\left(\sigma_{\Delta\theta_{GNSS}}\right)^2 = \left(\sigma_{\theta_{n_{GNSS}}}\right)^2 + \left(\sigma_{\theta_{1_{GNSS}}}\right)^2$$

Examples of the Kalman filter corresponding to the Fusion block 2 are now discussed. Let ($v_s$) denote a scaling factor of the vehicle's input speed from one cycle to another (for example from a previous cycle to a current cycle). The scaling factor may be computed as the ratio between the speed in the current cycle ($v_n$) and the speed in the previous cycle ($v_0$). The absolute value of the speed in the previous cycle $|v_0|$ may be greater than zero. This yields:

$$x_2^- = f_2(x_{2_0}, x_{1_n}, I_2)$$

$$\hat{x}_2^- = f_2(\hat{x}_{2_0}, \hat{x}_{1_n}, I_2)$$

$$I_2 = \{v_n, v_0, \dot{\theta}_n\}$$

$$(\hat{x}_2^-.x) = (\hat{x}_{2_0}.x) + (\hat{x}_{1_n}.S_s) \times (\hat{x}_2^-.v_x) \times \Delta t$$

$$(\hat{x}_2^-.y) = (\hat{x}_{2_0}.y) + (\hat{x}_{1_n}.S_s) \times (\hat{x}_2^-.v_y) \times \Delta t$$

$$rot = ((\hat{x}_{1_n}.\dot{\theta}_s) \times \dot{\theta}_n + (\hat{x}_{1_n}.\dot{\theta}_o)) \times \Delta t$$

$$if\ (|v_0| > 0)\ then\ v_s = \frac{v_n}{v_0}\ else\ v_s = 1$$

$$(\hat{x}_2^-.v_x) = v_s \times ((\hat{x}_{2_0}.v_x) \times \cos(rot) - (\hat{x}_{2_0}.v_y) \times \sin(rot))$$

$$(\hat{x}_2^-.v_y) = v_s \times ((\hat{x}_{2_0}.v_x) \times \sin(rot) + (\hat{x}_{2_0}.v_y) \times \cos(rot))$$

$$(\hat{x}_2^-.x) = (\hat{x}_{2_0}.x)$$
$$+ (\hat{x}_{1_n}.S_s) \times v_s \times ((\hat{x}_{2_0}.v_x) \times \cos(rot) - (\hat{x}_{2_0}.v_y) \times \sin(rot))$$
$$\times \Delta t$$

$$(\hat{x}_2^-.y) = (\hat{x}_{2_0}.y)$$
$$+ (\hat{x}_{1_n}.S_s) \times v_s \times ((\hat{x}_{2_0}.v_x) \times \sin(rot) + (\hat{x}_{2_0}.v_y) \times \cos(rot))$$
$$\times \Delta t$$

At the prediction, the method may overwrite the speed in the state of the Fusion block 2 with the input speed ($v_n$) projected on the vehicle's cartesian ($x,y$) coordinates.

$$x_2^- - \hat{x}_2^- = f_2(x_{2_0}, x_{1_n}, I_2) - f_2(\hat{x}_{2_0}, \hat{x}_{1_n}, \hat{I}_2)$$

$$x_2^- - \hat{x}_2^- = \frac{\partial f_2(x_{2_0}, x_{1_n}, I_2)}{\partial x_{2_0}}\bigg|_{\substack{x_{2_0}=\hat{x}_{2_0} \\ x_{1_n}=\hat{x}_{1_n} \\ I_2=\hat{I}_2}} (x_{2_0} - \hat{x}_{2_0})$$

$$+ \frac{\partial f_2(x_{2_0}, x_{1_n}, I_2)}{\partial x_{1_n}}\bigg|_{\substack{x_{2_0}=\hat{x}_{2_0} \\ x_{1_n}=\hat{x}_{1_n} \\ I_2=\hat{I}_2}} (x_{1_n} - \hat{x}_{1_n})$$

$$+ \frac{\partial f_2(x_{2_0}, x_{1_n}, I_2)}{\partial I_2}\bigg|_{\substack{x_{2_0}=\hat{x}_{2_0} \\ x_{1_n}=\hat{x}_{1_n} \\ I_2=\hat{I}_2}} (I_2 - \hat{I}_2)$$

$$F_{2_{x_2}} = \frac{\partial x_2^-}{\partial x_{2_0}}\bigg|_{\substack{x_{2_0}=\hat{x}_{2_0} \\ x_{1_n}=\hat{x}_{1_n} \\ I_2=\hat{I}_2}} = \frac{\partial f_2(x_{2_0}, x_{1_n}, I_2)}{\partial x_{2_0}}\bigg|_{\substack{x_{2_0}=\hat{x}_{2_0} \\ x_{1_n}=\hat{x}_{1_n} \\ I_2=\hat{I}_2}}$$

$$F_{2_{x_1}} = \frac{\partial x_2^-}{\partial x_{1_n}}\bigg|_{\substack{x_{2_0}=\hat{x}_{2_0} \\ x_{1_n}=\hat{x}_{1_n} \\ I_2=\hat{I}_2}} = \frac{\partial f_2\left(x_{2_0}, x_{1_n}, I_2\right)}{\partial x_{1_n}}\bigg|_{\substack{x_{2_0}=\hat{x}_{2_0} \\ x_{1_n}=\hat{x}_{1_n} \\ I_2=\hat{I}_2}}$$

$$F_{2_{I_2}} = \frac{\partial x_2^-}{\partial I_2}\bigg|_{\substack{x_{2_0}=\hat{x}_{2_0} \\ x_{1_n}=\hat{x}_{1_n} \\ I_2=\hat{I}_2}} = \frac{\partial f_2\left(x_{2_0}, x_{1_n}, I_2\right)}{\partial I_2}\bigg|_{\substack{x_{2_0}=\hat{x}_{2_0} \\ x_{1_n}=\hat{x}_{1_n} \\ I_2=\hat{I}_2}}$$

$$x_2^- - \hat{x}_2^- = F_{2x_2}\left(x_{20} - \hat{x}_{20}\right) + F_{2x_1}\left(x_{1n} - \hat{x}_{1n}\right) + F_{2I_2}\left(I_2 - \hat{I}_2\right)$$

$$E[(x_2^- - \hat{x}_2^-)(x_2^- - \hat{x}_2^-)^T]$$

$$= E\left[\left[F_{2x_2}\left(x_{20} - \hat{x}_{20}\right) + F_{2x_1}\left(x_{1n} - \hat{x}_{1n}\right)\right.\right.$$
$$\left.+ F_{2I_2}\left(I_2 - \hat{I}_2\right)\right]\left[F_{2x_2}\left(x_{20} - \hat{x}_{20}\right) + F_{2x_1}\left(x_{1n} - \hat{x}_{1n}\right)\right.$$
$$\left.\left.+ F_{2I_2}\left(I_2 - \hat{I}_2\right)\right]^T\right]$$

$$= E\left[\left[F_{2x_2}\left(x_{20} - \hat{x}_{20}\right) + F_{2x_1}\left(x_{1n} - \hat{x}_{1n}\right) + F_{2I_2}\left(I_2 - \hat{I}_2\right)\right]\left[\left(x_{20} - \hat{x}_{20}\right)^T F_{2x_2}{}^T\right.\right.$$
$$\left.\left.+ \left(x_{1n} - \hat{x}_{1n}\right)^T F_{2x_1}{}^T + \left(I_2 - \hat{I}_2\right)^T F_{2I_2}{}^T\right]\right]$$

$$= E\left[F_{2x_2}\left(x_{20} - \hat{x}_{20}\right)\left(x_{20} - \hat{x}_{20}\right)^T F_{2x_2}{}^T + F_{2x_1}\left(x_{1n} - \hat{x}_{1n}\right)\left(x_{1n} - \hat{x}_{1n}\right)^T F_{2x_1}{}^T\right.$$
$$+ F_{2I_2}\left(I_2 - \hat{I}_2\right)\left(I_2 - \hat{I}_2\right)^T F_{2I_2}{}^T$$
$$+ F_{2x_2}\left(x_{20} - \hat{x}_{20}\right)\left(x_{1n} - \hat{x}_{1n}\right)^T F_{2x_1}{}^T$$
$$+ F_{2x_2}\left(x_{20} - \hat{x}_{20}\right)\left(I_2 - \hat{I}_2\right)^T F_{2I_2}{}^T$$
$$+ F_{2x_1}\left(x_{1n} - \hat{x}_{1n}\right)\left(I_2 - \hat{I}_2\right)^T F_{2I_2}{}^T$$
$$+ F_{2x_1}\left(x_{1n} - \hat{x}_{1n}\right)\left(x_{20} - \hat{x}_{20}\right)^T F_{2x_2}{}^T$$
$$+ F_{2I_2}\left(I_2 - \hat{I}_2\right)\left(x_{1n} - \hat{x}_{1n}\right)^T F_{2x_1}{}^T$$
$$\left.+ F_{2I_2}\left(I_2 - \hat{I}_2\right)\left(x_{20} - \hat{x}_{20}\right)^T F_{2x_2}{}^T\right]$$

$$= F_{2x_2} E\left[\left(x_{20} - \hat{x}_{20}\right)\left(x_{20} - \hat{x}_{20}\right)^T\right] F_{2x_2}{}^T$$
$$+ F_{2x_1} E\left[\left(x_{1n} - \hat{x}_{1n}\right)\left(x_{1n} - \hat{x}_{1n}\right)^T\right] F_{2x_1}{}^T$$
$$+ F_{2I_2} E\left[\left(I_2 - \hat{I}_2\right)\left(I_2 - \hat{I}_2\right)^T\right] F_{2I_2}{}^T$$
$$+ F_{2x_2} E\left[\left(x_{20} - \hat{x}_{20}\right)\left(x_{1n} - \hat{x}_{1n}\right)^T\right] F_{2x_1}{}^T$$
$$+ F_{2x_2} E\left[\left(x_{20} - \hat{x}_{20}\right)\left(I_2 - \hat{I}_2\right)^T\right] F_{2I_2}{}^T$$
$$+ F_{2x_1} E\left[\left(x_{1n} - \hat{x}_{1n}\right)\left(I_2 - \hat{I}_2\right)^T\right] F_{2I_2}{}^T$$
$$+ F_{2x_1} E\left[\left(x_{1n} - \hat{x}_{1n}\right)\left(x_{20} - \hat{x}_{20}\right)^T\right] F_{2x_2}{}^T$$
$$+ F_{2I_2} E\left[\left(I_2 - \hat{I}_2\right)\left(x_{1n} - \hat{x}_{1n}\right)^T\right] F_{2x_1}{}^T$$
$$+ F_{2I_2} E\left[\left(I_2 - \hat{I}_2\right)\left(x_{20} - \hat{x}_{20}\right)^T\right] F_{2x_2}{}^T$$

$$= F_{2x_2}\left[Var(x_{20})\right] F_{2x_2}{}^T + F_{2x_1}\left[Var(x_{1n})\right] F_{2x_1}{}^T + F_{2I_2}\left[Var(I_2)\right] F_{2I_2}{}^T$$
$$+ F_{2x_2}\left[Covar(x_{20}, x_{1n})\right] F_{2x_1}{}^T + F_{2x_2}\left[Covar(x_{20}, I_2)\right] F_{2I_2}{}^T$$
$$+ F_{2x_1}\left[Covar(x_{1n}, I_2)\right] F_{2I_2}{}^T + F_{2x_1}\left[Covar(x_{20}, x_{1n})\right]^T F_{2x_2}{}^T$$
$$+ F_{2I_2}\left[Covar(x_{1n}, I_2)\right]^T F_{2x_1}{}^T + F_{2I_2}\left[Covar(x_{20}, I_2)\right]^T F_{2x_2}{}^T$$

As the recent calibrated parameters state ($x_{1n}$), the previous position and heading state ($x_{20}$), and the input signals ($I_2$) are independent from each other, this results in that such states are not correlated.

$$Covar\left(x_{2_0}, x_{1_n}\right) = Covar\left(x_{2_0}, I_2\right) = Covar\left(x_{1_n}, I_2\right) = 0.$$

$$P_2^- = E[(x_2^- - \hat{x}_2^-)(x_2^- - \hat{x}_2^-)^T]$$
$$= F_{2_{x_2}}\left[Var\left(x_{2_0}\right)\right]F_{2_{x_2}}{}^T + F_{2_{x_1}}\left[Var\left(x_{1_n}\right)\right]F_{2_{x_1}}{}^T$$
$$+ F_{2_{I_2}}[Var(I_2)]F_{2_{I_2}}{}^T$$

$$P_{2_0} = Var\left(x_{2_0}\right) = E\left[\left(x_{2_0} - \hat{x}_{2_0}\right)\left(x_{2_0} - \hat{x}_{2_0}\right)^T\right]$$

$$P_{1_n} = Var\left(x_{1_n}\right) = E\left[\left(x_{1_n} - \hat{x}_{1_n}\right)\left(x_{1_n} - \hat{x}_{1_n}\right)^T\right]$$

$$Q = Var(I_2) = E\left[\left(I_2 - \hat{I}_2\right)\left(I_2 - \hat{I}_2\right)^T\right]$$

$$P_2^- = F_{2_{x_2}}\ P_{2_0}\ F_{2_{x_2}}{}^T + F_{2_{x_1}}\ P_{1_n}\ F_{2_{x_1}}{}^T + F_{2_{I_2}}\ Q\ F_{2_{I_2}}{}^T$$

The method may consider the equations:

$$\frac{\partial(x_2^-.x)}{\partial\left(x_{2_0}.x\right)} = 1$$

$$\frac{\partial(x_2^-.y)}{\partial\left(x_{2_0}.x\right)} = 0$$

$$\frac{\partial(x_2^-.v_x)}{\partial\left(x_{2_0}.x\right)} = 0$$

$$\frac{\partial\left(x_2^-.v_y\right)}{\partial\left(x_{2_0}.x\right)} = 0$$

$$\frac{\partial(x_2^-.x)}{\partial\left(x_{2_0}.y\right)} = 0$$

$$\frac{\partial(x_2^-.y)}{\partial\left(x_{2_0}.y\right)} = 1$$

$$\frac{\partial(x_2^-.v_x)}{\partial(x_{2_0}.y)} = 0$$

$$\frac{\partial(x_2^-.v_y)}{\partial(x_{2_0}.y)} = 0$$

$$\frac{\partial(x_2^-.x)}{\partial(x_{2_0}.v_x)} = (x_{1_n}.S_s) \times v_s \times \cos(rot) \times \Delta t$$

$$\frac{\partial(x_2^-.y)}{\partial(x_{2_0}.v_x)} = (x_{1_n}.S_s) \times v_s \times \sin(rot) \times \Delta t$$

$$\frac{\partial(x_2^-.v_x)}{\partial(x_{2_0}.v_x)} = v_s \times \cos(rot)$$

$$\frac{\partial(x_2^-.v_y)}{\partial(x_{2_0}.v_x)} = v_s \times \sin(rot)$$

$$\frac{\partial(x_2^-.x)}{\partial(x_{2_0}.v_y)} = -(x_{1_n}.S_s) \times v_s \times \sin(rot) \times \Delta t$$

$$\frac{\partial(x_2^-.y)}{\partial(x_{2_0}.v_y)} = (x_{1_n}.S_s) \times v_s \times \cos(rot) \times \Delta t$$

$$\frac{\partial(x_2^-.v_x)}{\partial(\hat{x}_{2_0}.v_y)} = -v_s \times \sin(rot)$$

$$\frac{\partial(x_2^-.v_y)}{\partial(\hat{x}_{2_0}.v_y)} = v_s \times \cos(rot)$$

The method may consider the matrix $F_{2_{x_2}}$ of the form:

$$F_{2_{x_2}} = \begin{bmatrix} 1 & 0 & (\hat{x}_{1_n}.S_s) \times v_s \times \cos(rot) \times \Delta t & -(\hat{x}_{1_n}.S_s) \times v_s \times sin(rot) \times \Delta t \\ 0 & 1 & (\hat{x}_{1_n}.S_s) \times v_s \times \sin(rot) \times \Delta t & (\hat{x}_{1_n}.S_s) \times v_s \times \cos(rot) \times \Delta t \\ 0 & 0 & v_s \times \cos(rot) & -v_s \times \sin(rot) \\ 0 & 0 & v_s \times \sin(rot) & v_s \times \cos(rot) \end{bmatrix}$$

The matrix $F_{2x_2}$ has a first column with components:

$$
\begin{array}{c}
1 \\
1 \\
0' \\
0
\end{array}
$$

The matrix $F_{2x_2}$ has a second column with components:

$$
\begin{array}{c}
0 \\
1 \\
0' \\
0
\end{array}
$$

The matrix $F_{2x_2}$ has a third column with components:

$$
\begin{array}{c}
\left(\hat{x}_{1_n}.S_s\right) \times v_s \times \cos\left(\left(\left(\hat{x}_{1_n}.\dot{\theta}_s\right) \times \dot{\theta}_n + \left(\hat{x}_{1_n}.\dot{\theta}_o\right)\right) \times \Delta t\right) \times \Delta t \\
\left(\hat{x}_{1_n}.S_s\right) \times v_s \times \sin\left(\left(\left(\hat{x}_{1_n}.\dot{\theta}_s\right) \times \dot{\theta}_n + \left(\hat{x}_{1_n}.\dot{\theta}_o\right)\right) \times \Delta t\right) \times \Delta t \\
v_s \times \cos\left(\left(\left(\hat{x}_{1_n}.\dot{\theta}_s\right) \times \dot{\theta}_n + \left(\hat{x}_{1_n}.\dot{\theta}_o\right)\right) \times \Delta t\right) \\
v_s \times \sin\left(\left(\left(\hat{x}_{1_n}.\dot{\theta}_s\right) \times \dot{\theta}_n + \left(\hat{x}_{1_n}.\dot{\theta}_o\right)\right) \times \Delta t\right)
\end{array}
\,,
$$

The matrix $F_{2x_2}$ has a fourth column with components:

$$
\begin{array}{c}
-\left(\hat{x}_{1_n}.S_s\right) \times v_s \times sin\left(\left(\left(\hat{x}_{1_n}.\dot{\theta}_s\right) \times \dot{\theta}_n + \left(\hat{x}_{1_n}.\dot{\theta}_o\right)\right) \times \Delta t\right) \times \Delta t \\
\left(\hat{x}_{1_n}.S_s\right) \times v_s \times \cos\left(\left(\left(\hat{x}_{1_n}.\dot{\theta}_s\right) \times \dot{\theta}_n + \left(\hat{x}_{1_n}.\dot{\theta}_o\right)\right) \times \Delta t\right) \times \Delta t \\
-v_s \times \sin\left(\left(\left(\hat{x}_{1_n}.\dot{\theta}_s\right) \times \dot{\theta}_n + \left(\hat{x}_{1_n}.\dot{\theta}_o\right)\right) \times \Delta t\right) \\
v_s \times \cos\left(\left(\left(\hat{x}_{1_n}.\dot{\theta}_s\right) \times \dot{\theta}_n + \left(\hat{x}_{1_n}.\dot{\theta}_o\right)\right) \times \Delta t\right)
\end{array}
$$

The method may consider the following equations:

$$
\frac{\partial(x_2^-.x)}{\partial\left(x_{1_n}.S_s\right)} = v_s \times \left(\left(\hat{x}_{2_0}.v_x\right) \times \cos(rot) - \left(\hat{x}_{2_0}.v_y\right) \times \sin(rot)\right) \times \Delta t,
$$

$$
\frac{\partial(x_2^-.y)}{\partial\left(x_{1_n}.S_s\right)} = v_s \times \left(\left(\hat{x}_{2_0}.v_x\right) \times \sin(rot) + \left(\hat{x}_{2_0}.v_y\right) \times \cos(rot)\right) \times \Delta t,
$$

$$\frac{\partial(x_2^-.v_x)}{\partial\left(x_{1_n}.S_s\right)} = 0,$$

$$\frac{\partial(x_2^-.v_y)}{\partial\left(x_{1_n}.S_s\right)} = 0,$$

$$\frac{\partial(x_2^-.x)}{\partial\left(x_{1_n}.\dot{\theta}_s\right)} = v_s \times \left(\hat{x}_{1_n}.S_s\right) \times \left(-\left(\hat{x}_{2_0}.v_x\right) \times \sin(rot) - \left(\hat{x}_{2_0}.v_y\right) \times \cos(rot)\right) \times \dot{\theta}_n$$
$$\times (\Delta t)^2,$$

$$\frac{\partial(x_2^-.y)}{\partial\left(x_{1_n}.\dot{\theta}_s\right)} = v_s \times \left(\hat{x}_{1_n}.S_s\right) \times \left(\left(\hat{x}_{2_0}.v_x\right) \times \cos(rot) - \left(\hat{x}_{2_0}.v_y\right) \times \sin(rot)\right) \times \dot{\theta}_n$$
$$\times (\Delta t)^2,$$

$$\frac{\partial(x_2^-.v_x)}{\partial\left(x_{1_n}.\dot{\theta}_s\right)} = v_s \times \left(-\left(\hat{x}_{2_0}.v_x\right) \times \sin(rot) - \left(\hat{x}_{2_0}.v_y\right) \times \cos(rot)\right) \times \dot{\theta}_n \times \Delta t,$$

$$\frac{\partial(x_2^-.v_y)}{\partial\left(x_{1_n}.\dot{\theta}_s\right)} = v_s \times \left(\left(\hat{x}_{2_0}.v_x\right) \times \cos(rot) - \left(\hat{x}_{2_0}.v_y\right) \times \sin(rot)\right) \times \dot{\theta}_n \times \Delta t,$$

$$\frac{\partial(x_2^-.x)}{\partial\left(x_{1_n}.\dot{\theta}_o\right)} = v_s \times \left(\hat{x}_{1_n}.S_s\right) \times \left(-\left(\hat{x}_{2_0}.v_x\right) \times \sin(rot) - \left(\hat{x}_{2_0}.v_y\right) \times \cos(rot)\right) \times (\Delta t)^2,$$

$$\frac{\partial(x_2^-.y)}{\partial\left(x_{1_n}.\dot{\theta}_o\right)} = v_s \times \left(\hat{x}_{1_n}.S_s\right) \times \left(\left(\hat{x}_{2_0}.v_x\right) \times \cos(rot) - \left(\hat{x}_{2_0}.v_y\right) \times \sin(rot)\right) \times (\Delta t)^2,$$

$$\frac{\partial(x_2^-.v_x)}{\partial\left(x_{1_n}.\dot{\theta}_o\right)} = v_s \times \left(-\left(\hat{x}_{2_0}.v_x\right) \times \sin(rot) - \left(\hat{x}_{2_0}.v_y\right) \times \cos(rot)\right) \times \Delta t,$$

$$\frac{\partial(x_2^-.v_y)}{\partial\left(x_{1_n}.\dot{\theta}_o\right)} = v_s \times \left(\left(\hat{x}_{2_0}.v_x\right) \times \cos(rot) - \left(\hat{x}_{2_0}.v_y\right) \times \sin(rot)\right) \times \Delta t.$$

$$rot = \left(\left(\hat{x}_{1_n}.\dot{\theta}_s\right) \times \dot{\theta}_n + \left(\hat{x}_{1_n}.\dot{\theta}_o\right)\right) \times \Delta t$$

The method may consider a matrix $F_{2x_1}$ with a first column having components

$$v_s \times \left(\left(\hat{x}_{2_0}.v_x\right) \times \cos(rot) - \left(\hat{x}_{2_0}.v_y\right) \times \sin(rot)\right) \times \Delta t$$

$$v_s \times \left(\left(\hat{x}_{2_0}.v_x\right) \times \sin(rot) + \left(\hat{x}_{2_0}.v_y\right) \times \cos(rot)\right) \times \Delta t$$

$$0$$

$$0$$

The matrix $F_{2}x_1$ also has a second column having components

$$v_s \times \left(\hat{x}_{1_n}.S_s\right) \times \left(-\left(\hat{x}_{2_0}.v_x\right) \times \sin(rot) - \left(\hat{x}_{2_0}.v_y\right) \times \cos(rot)\right) \times \dot{\theta}_n \times (\Delta t)^2$$

$$v_s \times \left(\hat{x}_{1_n}.S_s\right) \times \left(\left(\hat{x}_{2_0}.v_x\right) \times \cos(rot) - \left(\hat{x}_{2_0}.v_y\right) \times \sin(rot)\right) \times \dot{\theta}_n \times (\Delta t)^2$$

$$v_s \times \left(-\left(\hat{x}_{2_0}.v_x\right) \times \sin(rot) - \left(\hat{x}_{2_0}.v_y\right) \times \cos(rot)\right) \times \dot{\theta}_n \times \Delta t$$

$$v_s \times \left(\left(\hat{x}_{2_0}.v_x\right) \times \cos(rot) - \left(\hat{x}_{2_0}.v_y\right) \times \sin(rot)\right) \times \dot{\theta}_n \times \Delta t$$

The matrix $F_{2}x_1$ also has a third column having components

$$v_s \times \left(\hat{x}_{1_n}.S_s\right) \times \left(-\left(\hat{x}_{2_0}.v_x\right) \times \sin(rot) - \left(\hat{x}_{2_0}.v_y\right) \times \cos(rot)\right) \times (\Delta t)^2$$

$$v_s \times \left(\hat{x}_{1_n}.S_s\right) \times \left(\left(\hat{x}_{2_0}.v_x\right) \times \cos(rot) - \left(\hat{x}_{2_0}.v_y\right) \times \sin(rot)\right) \times (\Delta t)^2$$

$$v_s \times \left(-\left(\hat{x}_{2_0}.v_x\right) \times \sin(rot) - \left(\hat{x}_{2_0}.v_y\right) \times \cos(rot)\right) \times \Delta t$$

$$v_s \times \left(\left(\hat{x}_{2_0}.v_x\right) \times \cos(rot) - \left(\hat{x}_{2_0}.v_y\right) \times \sin(rot)\right) \times \Delta t$$

The method may consider $I_2 = \{v_n, \dot{\theta}_n\}$ as the vehicle bus input. Indeed, this is because the speed in the state is overwritten with the input speed ($v_n$) on the bus projected in the Cartesian ($x,y$) coordinates. The current heading of the vehicle's motion is presented by the speed components in the state as follows.

$$head_0 = \tan^{-1}\left(\frac{\hat{x}_{2_0}.v_y}{\hat{x}_{2_0}.v_x}\right)$$

$$head^- = \tan^{-1}\left(\frac{\hat{x}_2^-.v_y}{\hat{x}_2^-.v_x}\right)$$

Moreover, the method may take into account the following variables:

$$\frac{\partial(x_2^-.x)}{\partial v_n} = \left(\hat{x}_{1_n}.S_s\right) \times \cos(rot + head_0) \times \Delta t,$$

$$\frac{\partial(x_2^-.y)}{\partial v_n} = \left(\hat{x}_{1_n}.S_s\right) \times \sin(rot + head_0) \times \Delta t,$$

$$\frac{\partial(x_2^-.v_x)}{\partial v_n} = \cos(rot + head_0),$$

$$\frac{\partial\left(x_2^-.v_y\right)}{\partial v_n} = \sin(rot + head_0),$$

$$\frac{\partial(x_2^-.x)}{\partial \dot{\theta}_n} = -v_n \times \left(\hat{x}_{1_n}.S_s\right) \times \left(\hat{x}_{1_n}.\dot{\theta}_s\right) \times \sin(rot + head_0) \times (\Delta t)^2,$$

$$\frac{\partial(x_2^-.y)}{\partial \dot{\theta}_n} = v_n \times \left(\hat{x}_{1_n}.S_s\right) \times \left(\hat{x}_{1_n}.\dot{\theta}_s\right) \times \cos(rot + head_0) \times (\Delta t)^2,$$

$$\frac{\partial(x_2^-.v_x)}{\partial \dot{\theta}_n} = -v_n \times \left(\hat{x}_{1_n}.\dot{\theta}_s\right) \times \sin(rot + head_0) \times \Delta t,$$

$$\frac{\partial\left(x_2^-.v_y\right)}{\partial \dot{\theta}_n} = v_n \times \left(\hat{x}_{1_n}.\dot{\theta}_s\right) \times \cos(rot + head_0) \times \Delta t.$$

The method may consider a matrix $F_{2_{I_2}}$ of the form:

$$F_{2_{I_2}}$$
$$= \begin{bmatrix} \left(\hat{x}_{1_n}.S_s\right) \times \cos(rot + head_0) \times \Delta t & -v_n \times \left(\hat{x}_{1_n}.S_s\right) \times \left(\hat{x}_{1_n}.\dot{\theta}_s\right) \times \sin(rot + head_0) \times (\Delta t)^2 \\ \left(\hat{x}_{1_n}.S_s\right) \times \sin(rot + head_0) \times \Delta t & v_n \times \left(\hat{x}_{1_n}.S_s\right) \times \left(\hat{x}_{1_n}.\dot{\theta}_s\right) \times \cos(rot + head_0) \times (\Delta t)^2 \\ \cos(rot + head_0) & -v_n \times \left(\hat{x}_{1_n}.\dot{\theta}_s\right) \times \sin(rot + head_0) \times \Delta t \\ \sin(rot + head_0) & v_n \times \left(\hat{x}_{1_n}.\dot{\theta}_s\right) \times \cos(rot + head_0) \times \Delta t \end{bmatrix}$$

$F_{2_{I_2}}$ is a matrix having a left column with components :

$$\left(\hat{x}_{1_n}.S_s\right) \times \cos\left(\left(\left(\hat{x}_{1_n}.\dot{\theta}_s\right) \times \dot{\theta}_n + \left(\hat{x}_{1_n}.\dot{\theta}_o\right)\right) \times \Delta t + \tan^{-1}\left(\frac{\hat{x}_{2_0}.v_y}{\hat{x}_{2_0}.v_x}\right)\right) \times \Delta t$$

$$\left(\hat{x}_{1_n}.S_s\right) \times \sin\left(\left(\left(\hat{x}_{1_n}.\dot{\theta}_s\right) \times \dot{\theta}_n + \left(\hat{x}_{1_n}.\dot{\theta}_o\right)\right) \times \Delta t + tan^{-1}\left(\frac{\hat{x}_{2_0}.v_y}{\hat{x}_{2_0}.v_x}\right)\right) \times \Delta t$$

$$\cos\left(\left(\left(\hat{x}_{1_n}.\dot{\theta}_s\right) \times \dot{\theta}_n + \left(\hat{x}_{1_n}.\dot{\theta}_o\right)\right) \times \Delta t + tan^{-1}\left(\frac{\hat{x}_{2_0}.v_y}{\hat{x}_{2_0}.v_x}\right)\right)$$

$$\sin\left(\left(\left(\hat{x}_{1_n}.\dot{\theta}_s\right) \times \dot{\theta}_n + \left(\hat{x}_{1_n}.\dot{\theta}_o\right)\right) \times \Delta t + tan^{-1}\left(\frac{\hat{x}_{2_0}.v_y}{\hat{x}_{2_0}.v_x}\right)\right)$$

and a right column with components :

$$-v_n \times \left(\hat{x}_{1_n}.S_s\right) \times \left(\hat{x}_{1_n}.\dot{\theta}_s\right) \times \sin\left(\left(\left(\hat{x}_{1_n}.\dot{\theta}_s\right) \times \dot{\theta}_n + \left(\hat{x}_{1_n}.\dot{\theta}_o\right)\right) \times \Delta t + tan^{-1}\left(\frac{\hat{x}_{2_0}.v_y}{\hat{x}_{2_0}.v_x}\right)\right) \times (\Delta t)^2$$

$$v_n \times \left(\hat{x}_{1_n}.S_s\right) \times \left(\hat{x}_{1_n}.\dot{\theta}_s\right) \times \cos\left(\left(\left(\hat{x}_{1_n}.\dot{\theta}_s\right) \times \dot{\theta}_n + \left(\hat{x}_{1_n}.\dot{\theta}_o\right)\right) \times \Delta t + tan^{-1}\left(\frac{\hat{x}_{2_0}.v_y}{\hat{x}_{2_0}.v_x}\right)\right) \times (\Delta t)^2$$

$$-v_n \times \left(\hat{x}_{1_n}.\dot{\theta}_s\right) \times \sin\left(\left(\left(\hat{x}_{1_n}.\dot{\theta}_s\right) \times \dot{\theta}_n + \left(\hat{x}_{1_n}.\dot{\theta}_o\right)\right) \times \Delta t + tan^{-1}\left(\frac{\hat{x}_{2_0}.v_y}{\hat{x}_{2_0}.v_x}\right)\right) \times \Delta t$$

$$v_n \times \left(\hat{x}_{1_n}.\dot{\theta}_s\right) \times \cos\left(\left(\left(\hat{x}_{1_n}.\dot{\theta}_s\right) \times \dot{\theta}_n + \left(\hat{x}_{1_n}.\dot{\theta}_o\right)\right) \times \Delta t + tan^{-1}\left(\frac{\hat{x}_{2_0}.v_y}{\hat{x}_{2_0}.v_x}\right)\right) \times \Delta t$$

Moreover, the method may consider the following formulae:

$$\hat{x}_{2m} = \begin{bmatrix} x_m \\ y_m \\ v_{x_m} \\ v_{y_m} \end{bmatrix} = h_2\left(\hat{x}_2^-, \hat{x}_{1_n}\right)$$

$$\hat{x}_{2m} = h_2\left(\hat{x}_2^-, \hat{x}_{1_n}\right)$$

$$\left(\hat{x}_{2m}.x\right) = \left(\hat{x}_2^-.x\right)$$

$$\left(\hat{x}_{2m}.y\right) = \left(\hat{x}_2^-.y\right)$$

$$\left(\hat{x}_{2m}.v_x\right) = \left(\hat{x}_{1_n}.S_s\right) \times \left(\hat{x}_2^-.v_x\right)$$

$$\left(\hat{x}_{2m}.v_y\right) = \left(\hat{x}_{1_n}.S_s\right) \times \left(\hat{x}_2^-.v_y\right)$$

$$H_{2x_2} = \left.\frac{\partial x_{2m}}{\partial x_2^-}\right|_{\substack{x_2^- = \hat{x}_2^- \\ x_{1n} = \hat{x}_{1n}}} = \frac{\partial h_2(\hat{x}_2^-, \hat{x}_{1n})}{\partial x_2^-} = \begin{bmatrix} 1 & 0 & 0 & 0 \\ 0 & 1 & 0 & 0 \\ 0 & 0 & (\hat{x}_{1n}.S_s) & 0 \\ 0 & 0 & 0 & (\hat{x}_{1n}.S_s) \end{bmatrix}$$

$$H_{2x_1} = \left.\frac{\partial x_{2m}}{\partial x_{1n}}\right|_{\substack{x_2^- = \hat{x}_2^- \\ x_{1n} = \hat{x}_{1n}}} = \frac{\partial h_2(\hat{x}_2^-, \hat{x}_{1n})}{\partial \hat{x}_{1n}} = \begin{bmatrix} 0 & 0 & 0 \\ 0 & 0 & 0 \\ (\hat{x}_2^-.v_x) & 0 & 0 \\ (\hat{x}_2^-.v_y) & 0 & 0 \end{bmatrix}$$

It can be concluded that:

$$K_2 = P_2^- \, H_{2x_2}{}^T \left( H_{2x_2} \, P_2^- \, H_{2x_2}{}^T + H_{2x_1} \, P_{1n} \, H_{2x_1}{}^T + R_2 \right)^{-1}$$

$$\hat{x}_{2n} = \hat{x}_2^- + K_2\left[\hat{Z}_2 - h_2(\hat{x}_2^-, \hat{x}_{1n})\right] = \hat{x}_2^- + K_2\left[\hat{Z}_2 - \hat{x}_{2m}\right]$$
$$P_{2n} = P_2^- - K_2 \, H_{2x_2} \, P_2^-.$$

The above equations result from the proof of the innovative Kalman filter described below.

It shall be noted that the GNSS measurement state $Z_2$ is presented with mean $\hat{Z}_2$ and covariance $R_2$. The covariance matrix of the GNSS measurements can be set to a diagonal matrix, with each of the diagonal elements presents the variance of one of the state elements assuming no cross correlation between them as follows.

$$Z_2 = \begin{bmatrix} x_{GNSS} \\ y_{GNSS} \\ v_{x_{GNSS}} \\ v_{y_{GNSS}} \end{bmatrix}$$

$$\hat{Z}_2 = \begin{bmatrix} \hat{x}_{GNSS} \\ \hat{y}_{GNSS} \\ \hat{v}_{x_{GNSS}} \\ \hat{v}_{y_{GNSS}} \end{bmatrix}$$

$$R_2 = \begin{bmatrix} (\sigma_{x_{GNSS}})^2 & 0 & 0 & 0 \\ 0 & (\sigma_{y_{GNSS}})^2 & 0 & 0 \\ 0 & 0 & (\sigma_{v_{x_{GNSS}}})^2 & 0 \\ 0 & 0 & 0 & (\sigma_{v_{y_{GNSS}}})^2 \end{bmatrix}$$

In order to estimate the variance in the positions and speeds of GNSS detected location points, the standard deviation provided in the GNSS data for both the GNSS estimated speed and heading shall be used. The signals *sigma_speed* and *sigma_heading* provided by GNSS can be used to present the standard deviation in the GNSS speed ($\sigma_{v_{GNSS}}$) and the standard deviation in the GNSS heading ($\sigma_{\theta_{GNSS}}$), respectively at every GNSS location point. Moreover, the Horizontal Estimated Position Error (*HEPE*) and Horizontal Dilution Of Precision (*HDOP*) signals shall be used to estimate the position errors, especially the second one according to reference M. Specht, "Experimental Studies on the Relationship Between HDOP and Position Error in the GPS System", March 2022, Metrology and Measurement Systems 29(1):17-36, DOI:10.24425/mms.2022.138549, which is incorporated herein by reference. Thus, the computing of the variance of the state elements can be formulated as follows.

$$\sigma_{x_{GNSS}} = HEPE \times HDOP$$

$$\sigma_{y_{GNSS}} = HEPE \times HDOP$$

$$\left(\sigma_{x_{GNSS}}\right)^2 = (HEPE)^2 \times (HDOP)^2$$

$$\left(\sigma_{y_{GNSS}}\right)^2 = (HEPE)^2 \times (HDOP)^2$$

The accuracy of the GNSS data is highly affected during the vehicle sharp steering maneuvers. In order to consider the effect of the yaw rate on the accuracy of the obtained GNSS data, the following equations are formulated to use the average yaw rate ($\dot{\theta}_{avg}$) from the vehicle bus data along GNSS cycle in estimating the vehicle heading. $\theta_{GNSS}$ presents the heading obtained from GNSS at the previous GNSS cycle, and $\Delta t_{GNSS}$ presents the cycle time of the input GNSS data. $\sigma_{\dot{\theta}}$ presents the variance in the input yaw rate, which is used as well in Q, while $\sigma_{\Delta t_{GNSS}}$ presents the variance in the cycle time of the GNSS. Both can be predefined according to the available GNSS data.

$$v_{x_{GNSS}} = v_{GNSS} \times \cos\left(90° - \left(\theta_{GNSS} + \dot{\theta}_{avg} \times \Delta t_{GNSS}\right)\right)$$
$$= v_{GNSS} \times \sin\left(\theta_{GNSS} + \dot{\theta}_{avg} \times \Delta t_{GNSS}\right)$$

$$v_{y_{GNSS}} = v_{GNSS} \times \sin\left(90° - \left(\theta_{GNSS} + \dot{\theta}_{avg} \times \Delta t_{GNSS}\right)\right)$$
$$= v_{GNSS} \times \cos\left(\theta_{GNSS} + \dot{\theta}_{avg} \times \Delta t_{GNSS}\right)$$

$$\frac{\partial v_{x_{GNSS}}}{\partial v_{GNSS}} = \sin\left(\theta_{GNSS} + \dot{\theta}_{avg} \times \Delta t_{GNSS}\right)$$

$$\frac{\partial v_{x_{GNSS}}}{\partial \theta_{GNSS}} = v_{GNSS} \times \cos\left(\theta_{GNSS} + \dot{\theta}_{avg} \times \Delta t_{GNSS}\right)$$

$$\frac{\partial v_{x_{GNSS}}}{\partial \dot{\theta}_{avg}} = v_{GNSS} \times \cos\left(\theta_{GNSS} + \dot{\theta}_{avg} \times \Delta t_{GNSS}\right) \times \Delta t_{GNSS}$$

$$\frac{\partial v_{x_{GNSS}}}{\partial \Delta t_{GNSS}} = v_{GNSS} \times \cos\left(\theta_{GNSS} + \dot{\theta}_{avg} \times \Delta t_{GNSS}\right) \times \dot{\theta}_{avg}$$

$$\frac{\partial v_{y_{GNSS}}}{\partial v_{GNSS}} = \cos\left(\theta_{GNSS} + \dot{\theta}_{avg} \times \Delta t_{GNSS}\right)$$

$$\frac{\partial v_{y\,GNSS}}{\partial \theta_{GNSS}} = -v_{GNSS} \times \sin\left(\theta_{GNSS} + \dot{\theta}_{avg} \times \Delta t_{GNSS}\right)$$

$$\frac{\partial v_{y\,GNSS}}{\partial \dot{\theta}_{avg}} = -v_{GNSS} \times \sin\left(\theta_{GNSS} + \dot{\theta}_{avg} \times \Delta t_{GNSS}\right) \times \Delta t_{GNSS}$$

$$\frac{\partial v_{y\,GNSS}}{\partial \Delta t_{GNSS}} = -v_{GNSS} \times \sin\left(\theta_{GNSS} + \dot{\theta}_{avg} \times \Delta t_{GNSS}\right) \times \dot{\theta}_{avg}$$

As already proved, it can be deduced the following relations.

$$
\begin{aligned}
\left(\sigma_{v_{xGNSS}}\right)^2 &= \left(\sin^2\left(\theta_{GNSS} + \dot{\theta}_{avg} \times \Delta t_{GNSS}\right)\right)\left(\sigma_{v_{GNSS}}\right)^2 \\
&+ (v_{GNSS})^2 \left(\cos^2\left(\theta_{GNSS} + \dot{\theta}_{avg} \times \Delta t_{GNSS}\right)\right)\left(\sigma_{\theta_{GNSS}}\right)^2 \\
&+ (v_{GNSS})^2 \left(\cos^2\left(\theta_{GNSS} + \dot{\theta}_{avg} \times \Delta t_{GNSS}\right)\right)(\Delta t_{GNSS})^2\left(\sigma_{\dot{\theta}}\right)^2 \\
&+ (v_{GNSS})^2 \left(\cos^2\left(\theta_{GNSS} + \dot{\theta}_{avg} \times \Delta t_{GNSS}\right)\right)(\dot{\theta})^2\left(\sigma_{\Delta t_{GNSS}}\right)^2
\end{aligned}
$$

$$
\begin{aligned}
\left(\sigma_{v_{yGNSS}}\right)^2 &= \left(\cos^2\left(\theta_{GNSS} + \dot{\theta}_{avg} \times \Delta t_{GNSS}\right)\right)\left(\sigma_{v_{GNSS}}\right)^2 \\
&+ (v_{GNSS})^2 \left(\sin^2\left(\theta_{GNSS} + \dot{\theta}_{avg} \times \Delta t_{GNSS}\right)\right)\left(\sigma_{\theta_{GNSS}}\right)^2 \\
&+ (v_{GNSS})^2 \left(\sin^2\left(\theta_{GNSS} + \dot{\theta}_{avg} \times \Delta t_{GNSS}\right)\right)(\Delta t_{GNSS})^2\left(\sigma_{\dot{\theta}}\right)^2 \\
&+ (v_{GNSS})^2 \left(\sin^2\left(\theta_{GNSS} + \dot{\theta}_{avg} \times \Delta t_{GNSS}\right)\right)(\dot{\theta})^2\left(\sigma_{\Delta t_{GNSS}}\right)^2
\end{aligned}
$$

Finally, according to previously-cited reference M. Specht, "Experimental Studies on the Relationship Between HDOP and Position Error in the GPS System", March 2022, Metrology and Measurement Systems 29(1):17-36, DOI:10.24425/mms.2022.138549, which is incorporated herein by reference, the HDOP term can be introduced:

$$
\begin{aligned}
\left(\sigma_{v_{xGNSS}}\right)^2 &= \Big[\left(\sin^2\left(\theta_{GNSS} + \dot{\theta}_{avg} \times \Delta t_{GNSS}\right)\right)\left(\sigma_{v_{GNSS}}\right)^2 \\
&+ (v_{GNSS})^2 \left(\cos^2\left(\theta_{GNSS} + \dot{\theta}_{avg} \times \Delta t_{GNSS}\right)\right)\left(\sigma_{\theta_{GNSS}}\right)^2 \\
&+ (v_{GNSS})^2 \left(\cos^2\left(\theta_{GNSS} + \dot{\theta}_{avg} \times \Delta t_{GNSS}\right)\right)(\Delta t_{GNSS})^2\left(\sigma_{\dot{\theta}}\right)^2 \\
&+ (v_{GNSS})^2 \left(\cos^2\left(\theta_{GNSS} + \dot{\theta}_{avg} \times \Delta t_{GNSS}\right)\right)(\dot{\theta})^2\left(\sigma_{\Delta t_{GNSS}}\right)^2\Big] \\
&\times (HDOP)^2
\end{aligned}
$$

$$\left(\sigma_{v_{y_{GNSS}}}\right)^2 = \Big[\left(\cos^2\left(\theta_{GNSS} + \dot{\theta}_{avg} \times \Delta t_{GNSS}\right)\right)\left(\sigma_{v_{GNSS}}\right)^2$$

$$+ \left(v_{GNSS}\right)^2\left(\sin^2\left(\theta_{GNSS} + \dot{\theta}_{avg} \times \Delta t_{GNSS}\right)\right)\left(\sigma_{\theta_{GNSS}}\right)^2$$

$$+ \left(v_{GNSS}\right)^2\left(\sin^2\left(\theta_{GNSS} + \dot{\theta}_{avg} \times \Delta t_{GNSS}\right)\right)(\Delta t_{GNSS})^2\left(\sigma_{\dot{\theta}}\right)^2$$

$$+ \left(v_{GNSS}\right)^2\left(\sin^2\left(\theta_{GNSS} + \dot{\theta}_{avg} \times \Delta t_{GNSS}\right)\right)\left(\dot{\theta}\right)^2\left(\sigma_{\Delta t_{GNSS}}\right)^2\Big]$$

$$\times (HDOP)^2$$

Examples are discussed with reference to FIG.s 2 to 4.

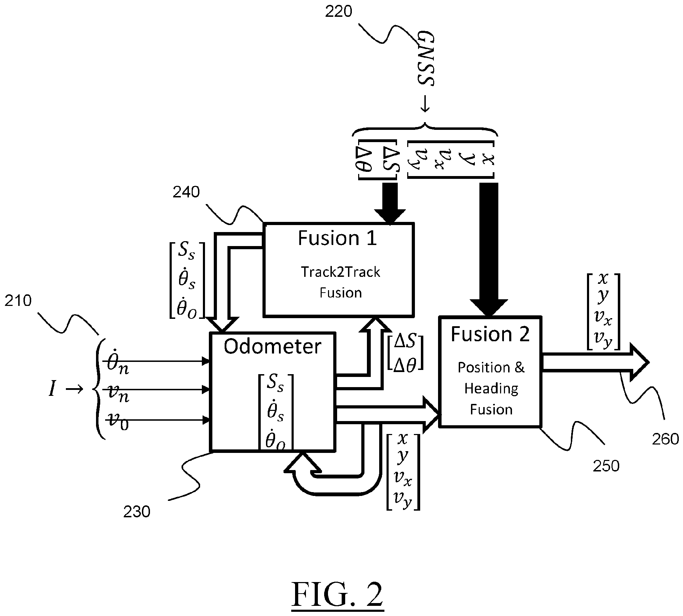

FIG. 2 shows a diagram illustration of implementations of the fusion blocks 1 and 2 by the method.

In these implementations, the method obtains the vehicle motion data 210 as $I = \{v_n, v_0, \dot{\theta}_n\}$, where $v_n$ denotes the vehicle speed in the current cycle, $v_0$ denotes the vehicle speed in the previous cycle, and $\dot{\theta}_n$ denotes the vehicle yaw rate in the current cycle.

In these implementations, the method also obtains, while the GNSS signal is available, GNSS data 220. The GNSS data 220 comprises a driven distance for the vehicle denoted by $\Delta S$ and orientation change denoted by $\Delta\theta$ for the vehicle. The GNSS data 220 further includes a location and heading of the vehicle denoted by $[x, y, v_x, v_y]$.

In these implementations, the method calibrates parameters of the odometer 230. The parameters of the odometer 230 include speed scaling, the vehicle yaw rate scaling, and the vehicle yaw rate offset denoted as $[S_s, \dot{\theta}_s, \dot{\theta}_o]$,

The calibration is based on a data fusion that uses a Kalman filter 240 (denoted as Fusion block 1) that determines a predicted distance variation and a predicted orientation variation of the vehicle based on the current calibration parameters of the odometer 230 and on the motion data 210. The Kalman filter 240 compares the predicted distance variation and predicted orientation variation to the distance variation and the orientation variation of the GNSS data 220.

When the GNSS signal is available, the method determines a localization 260 of the vehicle by performing a data fusion that is based on a Kalman filter 250 (denoted as Fusion block 2) that predicts the vehicle localization based on a fusion of the location and heading $[x, y, v_x, v_y]$ of the GNSS data 220 and a location and heading predicted, from the odometer 230, according to the calibrated odometer parameters.

When the GNSS signal is lost, the method determines a localization 260 of the vehicle based on a location and heading predicted according to the calibrated odometer parameters.

FIG.s 3 and 4 illustrate the performance of the method for Dead Reckoning localization. The performance is evaluated by comparing the computed vehicle location from the prediction odometer equations using the calibrated Odometer parameters against the vehicle location from a reference Differential GPS (DGPS). FIG.s 3 and 4 show two categories of recorded traces.

The tracks input to the Fusion block 1 are selected by filtering the straight motion parts where the displacement is the track length and orientation change is almost zero.

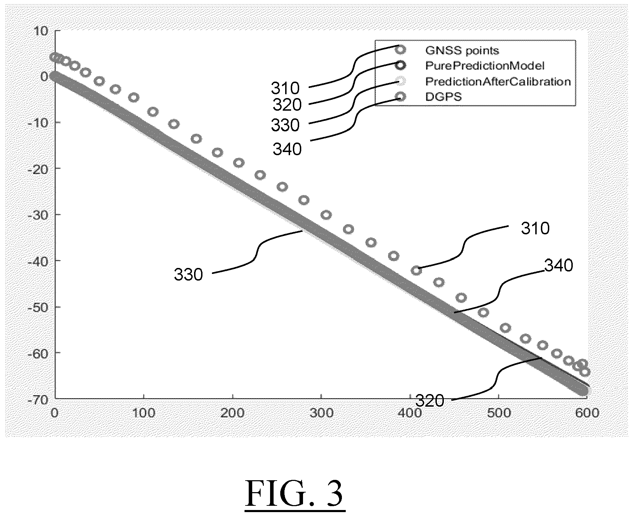

FIG. 3 shows the vehicle's straight motion so as to illustrate the calibration of the speed scale parameter, represented with GNSS points 310 stemming from the GNSS data, the pure prediction model 320, the prediction after calibration of the odometer 330 and the reference DGPS 340. The x-axis in FIG. 3 corresponds to the x-coordinates in cartesian coordinates of the projection of the vehicle to the ground. Accordingly, the y-axis corresponds to the y-coordinates in cartesian coordinates.

The straight motion trace plotted in FIG. 3 has at least one straight motion track, where the Fusion block 1 calibrates the speed scale. Moreover, the not-counter steering tracks with yaw rate having same sign connecting two straight motions are selected for the comparison of the predicted distance variation and predicted orientation variation to the distance variation and the orientation variation of the GNSS data. For such tracks, the displacement is the track length, and the orientation change is the difference in the angles of the two straight lines at the start and end of the track.

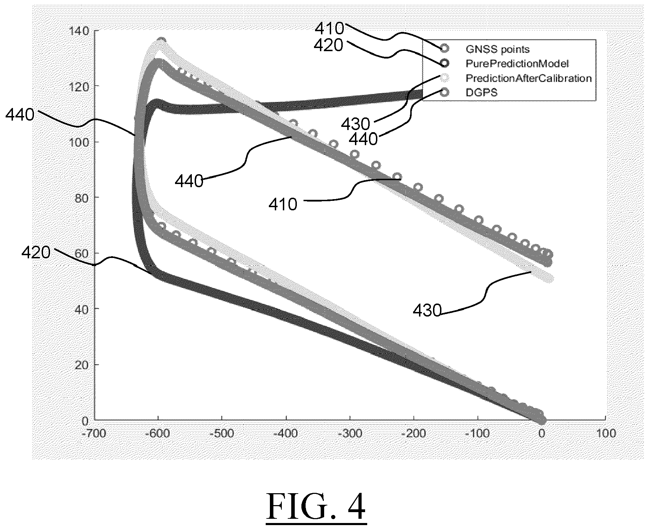

FIG. 4 shows the vehicle's U-shape motion so as to illustrate the calibration of both the yaw rate scale and offset parameters, represented with GNSS points 410 stemming from the GNSS data, the pure prediction model 420, the prediction after calibration of the odometer 430 and the reference DGPS 440. The x-axis in FIG. 4 corresponds to the x-coordinates in cartesian coordinates of the projection of the vehicle to the global earth horizontal east direction. Accordingly, the y-axis corresponds to the y-coordinates in cartesian coordinates of the projection of the vehicle to the global earth vertical north direction. The circular path 440 connecting the two straight segments is selected as a track for fusion to calibrate the yaw rate scaling and offset where the orientation difference is approximately 180°.

The straight motion track is filtered by fetching GNSS location points stored in history over specified time window. Then, line fitting is done for the GNSS points that achieves the least sum of square of the perpendicular distances from the points to the fitting line. If the mean of the absolute values of the perpendicular distances is less than specific threshold, then the GNSS points are categorized as straight motion track to be selected as input to Fusion block 1.

The plots shown in FIG.s 3 and 4 show how the predicted location of the vehicle based on the calibrated parameters in green is enhanced compared to the predicted location of the vehicle without parameters calibration in blue. Both are evaluated against the reference DGPS location in solid red, while the GNSS locations received at lower rate are the red points. It is clear from the figures the enhancement in localization after applying the proposed design for dynamic calibration of the parameters of the odometer.

A proof the innovative Kalman filter described above is shown below:

$$P_{2_n} = E\left[\left(x_{2_n} - \hat{x}_{2_n}\right)\left(x_{2_n} - \hat{x}_{2_n}\right)^T\right]$$

$$x_{2_n} = x_2^- + K_2\left[Z_2 - h_2\left(x_2^-, x_{1_n}\right)\right] = x_2^- + K_2\left[Z_2 - x_{2_m}\right]$$

$$\hat{x}_{2_n} = \hat{x}_2^- + K_2\left[\hat{Z}_2 - h_2\left(\hat{x}_2^-, \hat{x}_{1_n}\right)\right] = \hat{x}_2^- + K_2\left[\hat{Z}_2 - \hat{x}_{2_m}\right]$$

$$P_{2_n} = E\left[\left(x_{2_n} - \hat{x}_{2_n}\right)\left(x_{2_n} - \hat{x}_{2_n}\right)^T\right]$$

$$P_{2_n} = E\left[\left(x_2^- + K_2\left[Z_2 - h_2\left(x_2^-, x_{1_n}\right)\right] - \hat{x}_2^- \right.\right.$$
$$\left. - K_2\left[\hat{Z}_2 - h_2\left(\hat{x}_2^-, \hat{x}_{1_n}\right)\right]\right)\left(x_2^- + K_2\left[Z_2 - h_2\left(x_2^-, x_{1_n}\right)\right] - \hat{x}_2^- \right.$$
$$\left.\left. - K_2\left[\hat{Z}_2 - h_2\left(\hat{x}_2^-, \hat{x}_{1_n}\right)\right]\right)^T\right]$$

$$\therefore P_{2_n} = E\left[\left(x_2^- - \hat{x}_2^- + K_2\left[Z_2 - \hat{Z}_2\right]\right.\right.$$
$$\left. - K_2\left[h_2\left(x_2^-, x_{1_n}\right) - h_2\left(\hat{x}_2^-, \hat{x}_{1_n}\right)\right]\right)\left(x_2^- - \hat{x}_2^- + K_2\left[Z_2 - \hat{Z}_2\right]\right.$$
$$\left.\left. - K_2\left[h_2\left(x_2^-, x_{1_n}\right) - h_2\left(\hat{x}_2^-, \hat{x}_{1_n}\right)\right]\right)^T\right]$$

$$\because h_2\left(x_2^-, x_{1_n}\right) = h_2\left(\hat{x}_2^-, \hat{x}_{1_n}\right) + \left[\frac{\partial h_2\left(x_2^-, x_{1_n}\right)}{\partial x_2^-}\bigg|_{\substack{x_2^- = \hat{x}_2^- \\ x_{1_n} = \hat{x}_{1_n}}}\right]\left(x_2^- - \hat{x}_2^-\right)$$

$$+ \left[\frac{\partial h_2\left(x_2^-, x_{1_n}\right)}{\partial x_{1_n}}\bigg|_{\substack{x_2^- = \hat{x}_2^- \\ x_{1_n} = \hat{x}_{1_n}}}\right]\left(x_{1_n} - \hat{x}_{1_n}\right)$$

$$h_2\left(x_2^-, x_{1_n}\right) = h_2\left(\hat{x}_2^-, \hat{x}_{1_n}\right) + H_{2_{x_2}}\left(x_2^- - \hat{x}_2^-\right) + H_{2_{x_1}}\left(x_{1_n} - \hat{x}_{1_n}\right)$$

$$h_2\left(x_2^-, x_{1_n}\right) - h_2\left(\hat{x}_2^-, \hat{x}_{1_n}\right) = H_{2_{x_2}}\left(x_2^- - \hat{x}_2^-\right) + H_{2_{x_1}}\left(x_{1_n} - \hat{x}_{1_n}\right)$$

$$\therefore P_{2_n} = E\left[\left(x_2^- - \hat{x}_2^- + K_2[Z_2 - \hat{Z}_2]\right.\right.$$
$$- K_2\left[H_{2_{x_2}}(x_2^- - \hat{x}_2^-) + H_{2_{x_1}}\left(x_{1_n} - \hat{x}_{1_n}\right)\right]\right)\left(x_2^- - \hat{x}_2^-\right.$$
$$\left.\left. + K_2[Z_2 - \hat{Z}_2] - K_2\left[H_{2_{x_2}}(x_2^- - \hat{x}_2^-) + H_{2_{x_1}}\left(x_{1_n} - \hat{x}_{1_n}\right)\right]\right)^T\right]$$

$$P_{2_n}$$
$$= E\left[\begin{array}{c}\left((x_2^- - \hat{x}_2^-) + K_2[Z_2 - \hat{Z}_2] - K_2\left[H_{2_{x_2}}(x_2^- - \hat{x}_2^-) + H_{2_{x_1}}\left(x_{1_n} - \hat{x}_{1_n}\right)\right]\right) \\ \left((x_2^- - \hat{x}_2^-)^T + [Z_2 - \hat{Z}_2]^T K_2^T - \left[H_{2_{x_2}}(x_2^- - \hat{x}_2^-) + H_{2_{x_1}}\left(x_{1_n} - \hat{x}_{1_n}\right)\right]^T K_2^T\right)\end{array}\right]$$

$$P_{2_n} = E\left[\left((x_2^- - \hat{x}_2^-)(x_2^- - \hat{x}_2^-)^T + K_2[Z_2 - \hat{Z}_2](x_2^- - \hat{x}_2^-)^T\right.\right.$$
$$- K_2\left[H_{2_{x_2}}(x_2^- - \hat{x}_2^-) + H_{2_{x_1}}\left(x_{1_n} - \hat{x}_{1_n}\right)\right](x_2^- - \hat{x}_2^-)^T$$
$$+ (x_2^- - \hat{x}_2^-)[Z_2 - \hat{Z}_2]^T K_2^T + K_2[Z_2 - \hat{Z}_2][Z_2 - \hat{Z}_2]^T K_2^T$$
$$- K_2\left[H_{2_{x_2}}(x_2^- - \hat{x}_2^-) + H_{2_{x_1}}\left(x_{1_n} - \hat{x}_{1_n}\right)\right][Z_2 - \hat{Z}_2]^T K_2^T$$
$$- (x_2^- - \hat{x}_2^-)\left[H_{2_{x_2}}(x_2^- - \hat{x}_2^-) + H_{2_{x_1}}\left(x_{1_n} - \hat{x}_{1_n}\right)\right]^T K_2^T$$
$$- K_2[Z_2 - \hat{Z}_2]\left[H_{2_{x_2}}(x_2^- - \hat{x}_2^-) + H_{2_{x_1}}\left(x_{1_n} - \hat{x}_{1_n}\right)\right]^T K_2^T$$
$$+ K_2\left[H_{2_{x_2}}(x_2^- - \hat{x}_2^-)\right.$$
$$\left.\left.\left. + H_{2_{x_1}}\left(x_{1_n} - \hat{x}_{1_n}\right)\right]\left[H_{2_{x_2}}(x_2^- - \hat{x}_2^-) + H_{2_{x_1}}\left(x_{1_n} - \hat{x}_{1_n}\right)\right]^T K_2^T\right)\right]$$

$$P_{2_n} = E\Big[\big((x_2^- - \hat{x}_2^-)(x_2^- - \hat{x}_2^-)^T\big) + \big(K_2[Z_2 - \hat{Z}_2](x_2^- - \hat{x}_2^-)^T\big)$$

$$- \Big(K_2\, H_{2_{x_2}}(x_2^- - \hat{x}_2^-)(x_2^- - \hat{x}_2^-)^T\Big)$$

$$- \Big(K_2\, H_{2_{x_1}}(x_{1_n} - \hat{x}_{1_n})(x_2^- - \hat{x}_2^-)^T\Big) + \Big((x_2^- - \hat{x}_2^-)[Z_2 - \hat{Z}_2]^T K_2{}^T\Big)$$

$$+ \Big(K_2[Z_2 - \hat{Z}_2][Z_2 - \hat{Z}_2]^T K_2{}^T\Big)$$

$$- \Big(K_2\, H_{2_{x_2}}(x_2^- - \hat{x}_2^-)[Z_2 - \hat{Z}_2]^T K_2{}^T\Big)$$

$$- \Big(K_2\, H_{2_{x_1}}(x_{1_n} - \hat{x}_{1_n})[Z_2 - \hat{Z}_2]^T K_2{}^T\Big)$$

$$- \Big((x_2^- - \hat{x}_2^-)(x_2^- - \hat{x}_2^-)^T H_{2_{x_2}}{}^T K_2{}^T\Big)$$

$$- \Big((x_2^- - \hat{x}_2^-)(x_{1_n} - \hat{x}_{1_n})^T H_{2_{x_1}}{}^T K_2{}^T\Big)$$

$$- \Big(K_2[Z_2 - \hat{Z}_2](x_2^- - \hat{x}_2^-)^T H_{2_{x_2}}{}^T K_2{}^T\Big)$$

$$- \Big(K_2[Z_2 - \hat{Z}_2](x_{1_n} - \hat{x}_{1_n})^T H_{2_{x_1}}{}^T K_2{}^T\Big)$$

$$+ \Big(K_2\, H_{2_{x_2}}(x_2^- - \hat{x}_2^-)(x_2^- - \hat{x}_2^-)^T H_{2_{x_2}}{}^T K_2{}^T\Big)$$

$$+ \Big(K_2\, H_{2_{x_2}}(x_2^- - \hat{x}_2^-)(x_{1_n} - \hat{x}_{1_n})^T H_{2_{x_1}}{}^T K_2{}^T\Big)$$

$$+ \Big(K_2\, H_{2_{x_1}}(x_{1_n} - \hat{x}_{1_n})(x_2^- - \hat{x}_2^-)^T H_{2_{x_2}}{}^T K_2{}^T\Big)$$

$$+ \Big(K_2\, H_{2_{x_1}}(x_{1_n} - \hat{x}_{1_n})(x_{1_n} - \hat{x}_{1_n})^T H_{2_{x_1}}{}^T K_2{}^T\Big)\Big]$$

$$P_{2_n} = E[(x_2^- - \hat{x}_2^-)(x_2^- - \hat{x}_2^-)^T] + \left(K_2 E[(Z_2 - \hat{Z}_2)(x_2^- - \hat{x}_2^-)^T]\right)$$

$$- \left(K_2 H_{2_{x_2}} E[(x_2^- - \hat{x}_2^-)(x_2^- - \hat{x}_2^-)^T]\right)$$

$$- \left(K_2 H_{2_{x_1}} E[(x_{1_n} - \hat{x}_{1_n})(x_2^- - \hat{x}_2^-)^T]\right)$$

$$+ \left(E\left[(x_2^- - \hat{x}_2^-)(Z_2 - \hat{Z}_2)^T\right] K_2^T\right)$$

$$+ \left(K_2 E\left[(Z_2 - \hat{Z}_2)(Z_2 - \hat{Z}_2)^T\right] K_2^T\right)$$

$$- \left(K_2 H_{2_{x_2}} E\left[(x_2^- - \hat{x}_2^-)(Z_2 - \hat{Z}_2)^T\right] K_2^T\right)$$

$$- \left(K_2 H_{2_{x_1}} E\left[(x_{1_n} - \hat{x}_{1_n})(Z_2 - \hat{Z}_2)^T\right] K_2^T\right)$$

$$- \left(E[(x_2^- - \hat{x}_2^-)(x_2^- - \hat{x}_2^-)^T] H_{2_{x_2}}{}^T K_2^T\right)$$

$$- \left(E\left[(x_2^- - \hat{x}_2^-)(x_{1_n} - \hat{x}_{1_n})^T\right] H_{2_{x_1}}{}^T K_2^T\right)$$

$$- \left(K_2 E[(Z_2 - \hat{Z}_2)(x_2^- - \hat{x}_2^-)^T] H_{2_{x_2}}{}^T K_2^T\right)$$

$$- \left(K_2 E\left[(Z_2 - \hat{Z}_2)(x_{1_n} - \hat{x}_{1_n})^T\right] H_{2_{x_1}}{}^T K_2^T\right)$$

$$+ \left(K_2 H_{2_{x_2}} E[(x_2^- - \hat{x}_2^-)(x_2^- - \hat{x}_2^-)^T] H_{2_{x_2}}{}^T K_2^T\right)$$

$$+ \left(K_2 H_{2_{x_2}} E\left[(x_2^- - \hat{x}_2^-)(x_{1_n} - \hat{x}_{1_n})^T\right] H_{2_{x_1}}{}^T K_2^T\right)$$

$$+ \left(K_2 H_{2_{x_1}} E[(x_{1_n} - \hat{x}_{1_n})(x_2^- - \hat{x}_2^-)^T] H_{2_{x_2}}{}^T K_2^T\right)$$

$$+ \left(K_2 H_{2_{x_1}} E\left[(x_{1_n} - \hat{x}_{1_n})(x_{1_n} - \hat{x}_{1_n})^T\right] H_{2_{x_1}}{}^T K_2^T\right)$$

$$E[(x_2^- - \hat{x}_2^-)(x_2^- - \hat{x}_2^-)^T] = P_2^-$$

$$E\left[(x_{1_n} - \hat{x}_{1_n})(x_{1_n} - \hat{x}_{1_n})^T\right] = P_{1_n}$$

$$E\left[(Z_2 - \hat{Z}_2)(Z_2 - \hat{Z}_2)^T\right] = R$$

It results that, as there is no correlation between $\{x_{1_n}, x_2^-, Z_2\}$ because they are independent, their corresponding covariance equals to zero.

$$E[(x_{1_n} - \hat{x}_{1_n})(x_2^- - \hat{x}_2^-)^T] = E\left[(x_2^- - \hat{x}_2^-)(x_{1_n} - \hat{x}_{1_n})^T\right] = 0$$

$$E[(Z_2 - \hat{Z}_2)(x_2^- - \hat{x}_2^-)^T] = E\left[(x_2^- - \hat{x}_2^-)(Z_2 - \hat{Z}_2)^T\right] = 0$$

$$E\left[(x_{1_n} - \hat{x}_{1_n})(Z_2 - \hat{Z}_2)^T\right] = E\left[(Z_2 - \hat{Z}_2)(x_{1_n} - \hat{x}_{1_n})^T\right] = 0$$

$$P_{2_n} = P_2^- - \left( K_2\, H_{2_{x_2}}\, P_2^- \right) + \left( K_2\, R\, K_2^{\,T} \right) - \left( P_2^-\, H_{2_{x_2}}^{\,T}\, K_2^{\,T} \right)$$
$$+ \left( K_2\, H_{2_{x_2}}\, P_2^-\, H_{2_{x_2}}^{\,T}\, K_2^{\,T} \right) + \left( K_2\, H_{2_{x_1}}\, P_{1_n}\, H_{2_{x_1}}^{\,T}\, K_2^{\,T} \right)$$

In order to obtain optimal $K_2$ at which $P_{2_n}$ is minimized, $K_2$ is solved as in the following equation:

$$\frac{\partial P_{2_n}}{\partial K_2^{\,T}} = 0$$

Noting the following rules for matrices derivatives shall be applied:

$$\frac{\partial (Ax)}{\partial x} = A$$

$$\frac{\partial (x^T A)}{\partial x} = A^T$$

$$\frac{\partial (x^T A\, x)}{\partial x} = 2x^T A$$

$$\frac{\partial P_{2_n}}{\partial K_2^{\,T}} = -\left( H_{2_{x_2}}\, P_2^- \right)^T + \left( 2\, K_2\, R \right) - \left( P_2^-\, H_{2_{x_2}}^{\,T} \right) + \left( 2\, K_2\, H_{2_{x_2}}\, P_2^-\, H_{2_{x_2}}^{\,T} \right)$$
$$+ \left( 2\, K_2\, H_{2_{x_1}}\, P_{1_n}\, H_{2_{x_1}}^{\,T} \right) = 0$$

As $P_2^-$ is symmetric matrix, then:

$$P_2^{-T} = P_2^-$$

$$\frac{\partial P_{2_n}}{\partial K_2^{\,T}} = 2\,(K_2\, R) - 2\left( P_2^-\, H_{2_{x_2}}^{\,T} \right) + 2\left( K_2\, H_{2_{x_2}}\, P_2^-\, H_{2_{x_2}}^{\,T} \right)$$
$$+ 2\left( K_2\, H_{2_{x_1}}\, P_{1_n}\, H_{2_{x_1}}^{\,T} \right) = 0$$
$$-\left( P_2^-\, H_{2_{x_2}}^{\,T} \right) + K_2\left( R + H_{2_{x_2}}\, P_2^-\, H_{2_{x_2}}^{\,T} + H_{2_{x_1}}\, P_{1_n}\, H_{2_{x_1}}^{\,T} \right) = 0$$

$$K_2 = \frac{\left( P_2^-\, H_{2_{x_2}}^{\,T} \right)}{\left( R + H_{2_{x_2}}\, P_2^-\, H_{2_{x_2}}^{\,T} + H_{2_{x_1}}\, P_{1_n}\, H_{2_{x_1}}^{\,T} \right)}$$

$$K_2 = P_2^-\, H_{2_{x_2}}^{\,T} \left( H_{2_{x_2}}\, P_2^-\, H_{2_{x_2}}^{\,T} + H_{2_{x_1}}\, P_{1_n}\, H_{2_{x_1}}^{\,T} + R \right)^{-1}$$

$$K_2 = P_2^- \, H_{2_{x_2}}{}^T \left( H_{2_{x_2}} \, P_2^- \, H_{2_{x_2}}{}^T + H_{2_{x_1}} \, P_{1_n} \, H_{2_{x_1}}{}^T + R \right)^{-1}$$

$$K_2{}^T = \left( H_{2_{x_2}} \, P_2^- \, H_{2_{x_2}}{}^T + H_{2_{x_1}} \, P_{1_n} \, H_{2_{x_1}}{}^T + R \right)^{-1} H_{2_{x_2}} \, P_2^-$$

$$P_{2_n} = P_2^- - \left( K_2 \, H_{2_{x_2}} \, P_2^- \right) + \left( K_2 \, R \, K_2{}^T \right) - \left( P_2^- \, H_{2_{x_2}}{}^T K_2{}^T \right)$$
$$+ \left( K_2 \, H_{2_{x_2}} \, P_2^- \, H_{2_{x_2}}{}^T K_2{}^T \right) + \left( K_2 \, H_{2_{x_1}} \, P_{1_n} \, H_{2_{x_1}}{}^T K_2{}^T \right)$$

$$P_{2_n} = P_2^- - \left( K_2 \, H_{2_{x_2}} \, P_2^- \right) + \left( K_2 \, R \, K_2{}^T \right) - \left( P_2^- \, H_{2_{x_2}}{}^T K_2{}^T \right)$$
$$+ \left( K_2 \left[ H_{2_{x_2}} \, P_2^- \, H_{2_{x_2}}{}^T + H_{2_{x_1}} \, P_{1_n} \, H_{2_{x_1}}{}^T \right] K_2{}^T \right)$$

$$P_{2_n} = P_2^- - \left( K_2 \, H_{2_{x_2}} \, P_2^- \right) - \left( P_2^- \, H_{2_{x_2}}{}^T K_2{}^T \right)$$
$$+ \left( K_2 \left[ H_{2_{x_2}} \, P_2^- \, H_{2_{x_2}}{}^T + H_{2_{x_1}} \, P_{1_n} \, H_{2_{x_1}}{}^T + R \right] K_2{}^T \right)$$

By substitution with $K_2$ and $K_2{}^T$:

$$K_2 \, H_{2_{x_2}} \, P_2^- = P_2^- \, H_{2_{x_2}}{}^T \left( H_{2_{x_2}} \, P_2^- \, H_{2_{x_2}}{}^T + H_{2_{x_1}} \, P_{1_n} \, H_{2_{x_1}}{}^T + R \right)^{-1} H_{2_{x_2}} \, P_2^-$$

$$P_2^- \, H_{2_{x_2}}{}^T K_2{}^T = P_2^- \, H_{2_{x_2}}{}^T \left( H_{2_{x_2}} \, P_2^- \, H_{2_{x_2}}{}^T + H_{2_{x_1}} \, P_{1_n} \, H_{2_{x_1}}{}^T + R \right)^{-1} H_{2_{x_2}} \, P_2^-$$

$$K_2 \left[ H_{2_{x_2}} \, P_2^- \, H_{2_{x_2}}{}^T + H_{2_{x_1}} \, P_{1_n} \, H_{2_{x_1}}{}^T + R \right] K_2{}^T$$
$$= P_2^- \, H_{2_{x_2}}{}^T \left( H_{2_{x_2}} \, P_2^- \, H_{2_{x_2}}{}^T + H_{2_{x_1}} \, P_{1_n} \, H_{2_{x_1}}{}^T \right.$$
$$+ R \Big)^{-1} \left[ H_{2_{x_2}} \, P_2^- \, H_{2_{x_2}}{}^T + H_{2_{x_1}} \, P_{1_n} \, H_{2_{x_1}}{}^T \right.$$
$$+ R \Big] \left( H_{2_{x_2}} \, P_2^- \, H_{2_{x_2}}{}^T + H_{2_{x_1}} \, P_{1_n} \, H_{2_{x_1}}{}^T + R \right)^{-1} H_{2_{x_2}} \, P_2^- =$$
$$= P_2^- \, H_{2_{x_2}}{}^T \left( H_{2_{x_2}} \, P_2^- \, H_{2_{x_2}}{}^T + H_{2_{x_1}} \, P_{1_n} \, H_{2_{x_1}}{}^T + R \right)^{-1} H_{2_{x_2}} \, P_2^-$$

$$\therefore P_{2_n} = P_2^- - \left( K_2 \, H_{2_{x_2}} \, P_2^- \right) - \left( P_2^- \, H_{2_{x_2}}{}^T K_2{}^T \right)$$
$$+ \left( K_2 \left[ H_{2_{x_2}} \, P_2^- \, H_{2_{x_2}}{}^T + H_{2_{x_1}} \, P_{1_n} \, H_{2_{x_1}}{}^T + R \right] K_2{}^T \right)$$

By substitution in the equation of $P_{2_n}$:

$$P_{2_n} = P_2^- - P_2^-\, H_{2_{x_2}}{}^T \left( H_{2_{x_2}}\, P_2^-\, H_{2_{x_2}}{}^T + H_{2_{x_1}}\, P_{1_n}\, H_{2_{x_1}}{}^T + R \right)^{-1} H_{2_{x_2}}\, P_2^-$$

$$- P_2^-\, H_{2_{x_2}}{}^T \left( H_{2_{x_2}}\, P_2^-\, H_{2_{x_2}}{}^T + H_{2_{x_1}}\, P_{1_n}\, H_{2_{x_1}}{}^T + R \right)^{-1} H_{2_{x_2}}\, P_2^-$$

$$+ P_2^-\, H_{2_{x_2}}{}^T \left( H_{2_{x_2}}\, P_2^-\, H_{2_{x_2}}{}^T + H_{2_{x_1}}\, P_{1_n}\, H_{2_{x_1}}{}^T + R \right)^{-1} H_{2_{x_2}}\, P_2^-$$

$$P_{2_n} = P_2^- - P_2^-\, H_{2_{x_2}}{}^T \left( H_{2_{x_2}}\, P_2^-\, H_{2_{x_2}}{}^T + H_{2_{x_1}}\, P_{1_n}\, H_{2_{x_1}}{}^T + R \right)^{-1} H_{2_{x_2}}\, P_2^-$$

It is therefore obtained:

$$P_{2_n} = P_2^- - K_2\, H_{2_{x_2}}\, P_2^-$$

**Claims**

1. A computer-implemented method for localization of a moving vehicle based on GNSS data and vehicle sensor data, the method comprising, in real-time:

   • obtaining:

     ◦ vehicle motion data stemming from at least one vehicle sensor, and
     ◦ while the GNSS signal is available, GNSS data of a positioning of the vehicle, including a distance variation and an orientation variation, and

   • calibrating parameters of an odometer of the vehicle based on a data fusion that uses a Kalman filter that determines a predicted distance variation and a predicted orientation variation of the vehicle based on a current calibration of the odometer parameters and on the motion data, and that compares the predicted distance variation and predicted orientation variation to the distance variation and the orientation variation of the GNSS data.

2. The method of claim 1, wherein the odometer predicts cyclically in time a new location of the vehicle and a new heading of the vehicle based on a location and heading predicted at the previous cycle and on the motion data.

3. The method of claim 2, wherein the motion data includes the vehicle speed in the current cycle, the vehicle speed in the previous cycle, and the vehicle yaw rate in the current cycle.

4. The method of any one of claims 1 to 3, wherein the parameters of the odometer include a vehicle speed scaling, a vehicle yaw rate scaling, and a vehicle yaw rate offset.

5. The method of claim 4, wherein calibrating parameters includes correcting one or any combination of the vehicle speed scaling, the vehicle yaw rate scaling, and the vehicle yaw rate offset.

6. The method of any one of claims 1 to 5, wherein the motion data stems from a wheel sensor, an Inertial Measurement Unit (IMU), and a steering system sensor.

7. The method of any one of claims 1 to 6, wherein the GNSS data further includes a location and heading of the vehicle, and the method further comprises, in real-time:

   when the GNSS signal is available, determining a localization of the vehicle by performing a data fusion that is based on a Kalman filter that predicts the vehicle localization based on a fusion of the location and heading of the GNSS data and a location and heading predicted according to the calibrated odometer parameters;
   when the GNSS signal is lost, determining a localization of the vehicle based on a location and heading predicted according to the calibrated odometer parameters.

8. The method of any one of claims 1 to 7, wherein the GNSS data stems from a GNSS device that comprises only one antenna.

9. The method of any one of claims 1 to 8, wherein the vehicle is a motorbike, a car, a bus or a truck.

10. A computer program comprising instructions which, when executed by a computer system, cause the system to perform the method of any one of claims 1 to 9.

11. A computer-readable data storage medium having recorded thereon the computer program of claim 10.

12. A system comprising a processor coupled to a memory, the memory having recorded thereon the computer program of claim 10.

13. The system of claim 12, wherein the system is coupled with or further comprises the GNSS device, the odometer, and the at least one sensor.

14. The system of claim 12, wherein the at least one sensor includes a wheel sensor, an Inertial Measurement Unit (IMU), and a steering system sensor.

15. A vehicle equipped with the system according to any one of claims 12 to 14.

FIG. 1

FIG. 2

# FIG. 3

FIG. 4

| | Europäisches Patentamt European Patent Office Office européen des brevets | **EUROPEAN SEARCH REPORT** | Application Number EP 23 16 9054 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 096 230 A2 (VISTEON GLOBAL TECH INC [US]) 2 May 2001 (2001-05-02)<br>* paragraphs [0001], [0008], [0012], [0014], [0026], [0030] – [0033] *<br>* paragraphs [0045], [0050], [0051] *<br>* figures 1-4 * | 1-15 | INV.<br>G01C21/16<br>G01S19/47<br>G01S19/49 |
| X | EP 2 541 203 A1 (FURUNO ELECTRIC CO [JP]) 2 January 2013 (2013-01-02)<br>* paragraphs [0008], [0011], [0012], [0031], [0035] – [0041] *<br>* paragraphs [0104], [0119] – [0121] *<br>* paragraphs [0134] – [0137], [0142] – [0145] *<br>* figures 1-6 * | 1-15 | |
| X | US 5 416 712 A (GEIER GEORGE J [US] ET AL) 16 May 1995 (1995-05-16)<br>* column 2, line 30 – line 60 *<br>* column 3, line 5 – line 9 *<br>* column 3, line 42 – line 64 *<br>* column 4, line 56 – column 5, line 54 *<br>* figures 1,2 * | 1-15 | TECHNICAL FIELDS SEARCHED (IPC)<br><br>G01C<br>G01S<br>G05D |
| A | US 2016/097862 A1 (YIM HYUN GU [KR]) 7 April 2016 (2016-04-07)<br>* paragraph [0032] *<br>* figure 1 * | 1-15 | |

The present search report has been drawn up for all claims

| Place of search | Date of completion of the search | Examiner |
|---|---|---|
| The Hague | 30 September 2023 | Yosri, Samir |

EPO FORM 1503 03.82 (P04C01)

## ANNEX TO THE EUROPEAN SEARCH REPORT
## ON EUROPEAN PATENT APPLICATION NO.

EP 23 16 9054

This annex lists the patent family members relating to the patent documents cited in the above-mentioned European search report.
The members are as contained in the European Patent Office EDP file on
The European Patent Office is in no way liable for these particulars which are merely given for the purpose of information.

30-09-2023

| Patent document cited in search report | | | Publication date | Patent family member(s) | | | Publication date |
|---|---|---|---|---|---|---|---|
| EP 1096230 | A2 | | 02-05-2001 | EP | 1096230 | A2 | 02-05-2001 |
| | | | | JP | 2001221652 | A | 17-08-2001 |
| | | | | US | 6282496 | B1 | 28-08-2001 |
| EP 2541203 | A1 | | 02-01-2013 | NONE | | | |
| US 5416712 | A | | 16-05-1995 | EP | 0653074 | A1 | 17-05-1995 |
| | | | | JP | H07509570 | A | 19-10-1995 |
| | | | | US | 5416712 | A | 16-05-1995 |
| | | | | WO | 9428435 | A1 | 08-12-1994 |
| US 2016097862 | A1 | | 07-04-2016 | CN | 105698787 | A | 22-06-2016 |
| | | | | KR | 20160040867 | A | 15-04-2016 |
| | | | | US | 2016097862 | A1 | 07-04-2016 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **M. SPECHT.** Experimental Studies on the Relationship Between HDOP and Position Error in the GPS System. *Metrology and Measurement Systems,* March 2022, vol. 29 (1), 17-36